# EUROPEAN PATENT APPLICATION

(11) **EP 4 726 864 A1**
(43) Date of publication of application: **15.04.2026**
(21) Application number: 23944837.6
(22) Date of filing: 22.09.2023
(51) Int. Cl.: H01M 50/102, H01M 50/14, H01M 50/342

(54) **BATTERY CELL, BATTERY, AND ELECTRICAL DEVICE**

(30) Priority: 13.07.2023 CN 202310855435
(71) Applicant: Contemporary Amperex Technology Co., Limited, Ningde, Fujian 352100 (CN)
(72) Inventor: WU, Kai, Ningde, Fujian 352100 (CN); ZHOU, Wenlin, Ningde, Fujian 352100 (CN); YANG, Kaihuan, Ningde, Fujian 352100 (CN); ZHOU, Jian, Ningde, Fujian 352100 (CN); LI, Quankun, Ningde, Fujian 352100 (CN); WANG, Peng, Ningde, Fujian 352100 (CN)
(74) Representative: Kraus & Lederer PartGmbB
(86) International application number: PCT/CN2023/120700
(87) International publication number: WO 2025/010831

(57) **Abstract**

A battery cell, a battery, and an electric device are disclosed. The battery cell includes a housing, a pressure relief mechanism, and a reinforcement member. The housing has a first wall portion, and the first wall portion is provided with a first groove. The pressure relief mechanism is disposed on the first wall portion. The reinforcement member is at least partially accommodated in the first groove, and the reinforcement member is disposed around the pressure relief mechanism. The reinforcement member is accommodated in the first groove, reducing the height by which the reinforcement member protrudes beyond the first wall portion. The provision of the first groove can reduce the weight of the first wall portion. The reinforcement member is at least partially accommodated in the first groove, which can enhance the rigidity and strength at the position where the first groove is provided, thereby improving the strength and rigidity of the first wall portion without significantly increasing its weight. When the first wall portion is subjected to an external impact, the reinforcement member can absorb energy of the external impact, which reduces the risk of damage to the pressure relief mechanism caused by the external impact, allowing the pressure relief mechanism to implement normal pressure relief function.

## Description

### CROSS-REFERENCE TO RELATED APPLICATIONS

This application claims priority to Chinese Patent Application No. 2023108554353, filed on July 13, 2023 and entitled "BATTERY CELL, BATTERY, AND ELECTRIC DEVICE", which is incorporated herein by reference in its entirety.

### TECHNICAL FIELD

This application relates to the field of batteries, and specifically, to a battery cell, a battery, and an electric device.

### BACKGROUND

Batteries are widely used in the field of new energy, such as in electric vehicles and new energy vehicles. Electric vehicles and new energy vehicles have become a new trend in the development of the automotive industry. A pressure relief mechanism is provided on the housing of a battery cell to release internal pressure when the internal pressure of the battery cell reaches a burst pressure. However, during use, the pressure relief mechanism often opens prematurely, resulting in failure to implement normal pressure relief function.

### SUMMARY

Embodiments of this application are intended to provide a battery cell, a battery, and an electric device, to address the issue in the related art that a pressure relief mechanism often opens prematurely and therefore cannot implement normal pressure relief function.

According to a first aspect, an embodiment of this application provides a battery cell. The battery cell includes a housing, a pressure relief mechanism, and a reinforcement member, where the housing has a first wall portion, and the first wall portion is provided with a first groove; the pressure relief mechanism is disposed on the first wall portion; and the reinforcement member is at least partially accommodated in the first groove, and the reinforcement member is disposed around the pressure relief mechanism.

In the above technical solution, the reinforcement member is accommodated in the first groove, which reduces the height by which the reinforcement member protrudes beyond the first wall portion, or even makes the reinforcement member not protrude beyond the first wall portion, reducing the risk of interference between the reinforcement member and other components. Additionally, the provision of the first groove can reduce the weight of the first wall portion. The reinforcement member is at least partially accommodated in the first groove, which can enhance the rigidity and strength at the position where the first groove is provided, thereby improving the strength and rigidity of the first wall portion without significantly increasing its weight. Moreover, since the reinforcement member is disposed around the pressure relief mechanism, when the first wall portion is subjected to an external impact, the reinforcement member can absorb energy of the external impact, reducing the magnitude of the impact force transmitted to the pressure relief mechanism. This reduces the risk of damage to the pressure relief mechanism caused by the external impact, allowing the pressure relief mechanism to implement normal pressure relief function.

In an optional technical solution of an embodiment of this application, a strength of a material of the reinforcement member is greater than a strength of a material of the first wall portion.

In the above technical solution, the strength of the material of the reinforcement member is greater than the strength of the material of the first wall portion, so that the reinforcement member does not protrude beyond the first wall portion, providing a strong reinforcement effect and making it less likely to interfere with other structures.

In an optional technical solution of an embodiment of this application, a protrusion is disposed on an outer surface of the reinforcement member.

In the above technical solution, the protrusion is disposed on the outer surface of the reinforcement member, so that the protrusion can provide a reinforcing effect, thereby further improving the strength around the pressure relief mechanism and reducing the risk of damage to the pressure relief mechanism caused by an external impact.

In an optional technical solution of an embodiment of this application, along a first direction, the protrusion is disposed on a surface of the reinforcement member facing away from the pressure relief mechanism, and/or the protrusion is disposed on a surface of the reinforcement member facing the pressure relief mechanism; where the first direction is perpendicular to a thickness direction of the first wall portion.

In the above technical solution, the protrusion may be disposed on the surface of the reinforcement member facing away from the pressure relief mechanism, or on the surface of the reinforcement member facing the pressure relief mechanism, or multiple protrusions may be provided, with a portion of protrusions disposed on the surface of the reinforcement member facing away from the pressure relief mechanism and another portion of the protrusions disposed on the surface of the reinforcement member facing the pressure relief mechanism. The protrusion can be regarded as a reinforcing rib, making the overall strength of the reinforcement member higher, thereby enhancing the strength around the pressure relief mechanism. When the first wall portion is subjected to an external impact, the reinforcement member can absorb more energy from the external impact to prevent damage, reducing the magnitude of the impact force transmitted to the pressure relief mechanism. This reduces the risk of damage to the pressure relief mechanism caused by the external impact, allowing the pressure relief mechanism to implement normal pressure relief function.

In an optional technical solution of an embodiment of this application, the first wall portion is provided with a second groove, where the second groove is in communication with the first groove, and the protrusion is at least partially accommodated in the second groove.

In the above technical solution, the protrusion is at least partially accommodated in the second groove, which reduces the height by which the protrusion protrudes beyond the first wall portion, or even makes the protrusion not protrude beyond the first wall portion, reducing the risk of interference between the protrusion and other components.

In an optional technical solution of an embodiment of this application, a strength of a material of the protrusion is greater than the strength of the material of the first wall portion.

In the above technical solution, the provision of the second groove can reduce the weight of the first wall portion. The protrusion is at least partially accommodated in the second groove, and the strength of the material of the protrusion is greater than the strength of the material of the first wall portion, enhancing the rigidity and strength at the position where the second groove is provided, further improving the strength and rigidity of the first wall portion without significantly increasing its weight.

In an optional technical solution of an embodiment of this application, the reinforcement member is provided with multiple protrusions, and the multiple protrusions are arranged along an extending direction of the reinforcement member.

In the above technical solution, multiple protrusions are arranged along the extending direction of the reinforcement member, further improving the strength around the pressure relief mechanism, and reducing the risk of damage to the pressure relief mechanism caused by an external impact.

In an optional technical solution of an embodiment of this application, the housing further includes a second wall portion, where the second wall portion is connected to the first wall portion; and the battery cell includes a connecting member, where the connecting member is connected to the reinforcement member, and the connecting member is at least partially in contact with an outer surface of the second wall portion.

In the above technical solution, when the first wall portion is subjected to an external impact, the connecting member can further transmit the impact transmitted to the reinforcement member to the second wall portion, thereby dispersing the impact force, and reducing the impact force transmitted to the pressure relief mechanism. This reduces the risk of damage to the pressure relief mechanism caused by the external impact, allowing the pressure relief mechanism to implement normal pressure relief function.

In an optional technical solution of an embodiment of this application, the battery cell includes two second wall portions, where the two second wall portions are disposed opposite each other, and each of the second wall portions is correspondingly provided with at least one connecting member.

In the above technical solution, each second wall portion is correspondingly provided with at least one connecting member, and the connecting member can disperse the external impact to the corresponding second wall portion, and further reducing the impact force transmitted to the pressure relief mechanism. This reduces the risk of damage to the pressure relief mechanism caused by the external impact, allowing the pressure relief mechanism to implement normal pressure relief function.

In an optional technical solution of an embodiment of this application, the connecting member includes a first connecting portion and a second connecting portion, where the first connecting portion connects the second connecting portion and the reinforcement member, the first connecting portion is disposed opposite the first wall portion, and the second connecting portion is in contact with the outer surface of the second wall portion.

In the above technical solution, the first connecting portion is disposed opposite the first wall portion and connects the reinforcement member and the second connecting portion, thereby transmitting external impact to the second connecting portion. The second connecting portion is attached to the outer surface of the second wall portion to transmit impact to the second wall portion, thereby dispersing the impact.

In an optional technical solution of an embodiment of this application, the housing further includes a third wall portion, where the third wall portion is disposed opposite the first wall portion, the second wall portion connects the first wall portion and the third wall portion, and along the thickness direction of the first wall portion, an end of the second connecting portion far from the first connecting portion protrudes beyond the third wall portion.

In the above technical solution, an end of the second connecting portion far from the first connecting portion protrudes beyond the third wall portion, resulting in a larger contact area between the second connecting portion and the second wall portion, thereby facilitating the transmission of the impact force to the second wall portion. The end of the second connecting portion far from the first connecting portion can also abut against other components, thereby transmitting the impact to other components to disperse the impact force.

In an optional technical solution of an embodiment of this application, the second wall portion is a wall portion of the housing with the largest outer surface area.

In the above technical solution, the second wall portion has a larger area, effectively buffering the impact transmitted by the connecting member.

In an optional technical solution of an embodiment of this application, the first groove is disposed on an outer surface of the first wall portion.

In the above technical solution, the first groove is disposed on the outer surface of the first wall portion, so that when the reinforcement member protrudes beyond the first wall portion, the reinforcement member does not occupy internal space of the battery cell, which is beneficial to improving the energy density of the battery cell. Additionally, the electrolyte inside the battery cell is less likely to come into contact with the reinforcement member, less likely to undergo chemical reactions with the reinforcement member.

In an optional technical solution of an embodiment of this application, the reinforcement member is entirely accommodated in the first groove.

In the above technical solution, the reinforcement member is entirely accommodated in the first groove, and the reinforcement member does not protrude beyond the first wall portion, making the reinforcement member less likely to interfere with other components. Additionally, for the battery, the reinforcement member is entirely accommodated in the first groove, reducing the space occupation within the box and helping improve the energy density of the battery.

In an optional technical solution of an embodiment of this application, along the thickness direction of the first wall portion, a surface of the reinforcement member facing away from an inner surface of the first wall portion is flush with the outer surface of the first wall portion.

In the above technical solution, the surface of the reinforcement member facing away from the inner surface of the first wall portion is flush with the outer surface of the first wall portion, so that the reinforcement member is exactly accommodated in the first groove, providing a strong reinforcement effect while not protruding beyond the first wall portion, reducing the likelihood of interference with other components.

In an optional technical solution of an embodiment of this application, the reinforcement member is an annular structure disposed around the pressure relief mechanism.

In the above technical solution, the reinforcement member is disposed around the pressure relief mechanism. In this way, regardless of which position of the first wall portion is subjected to an external impact, the reinforcement member can effectively absorb energy of the external impact, which reduces the risk of damage to the pressure relief mechanism caused by the external impact, allowing the pressure relief mechanism to implement normal pressure relief function.

In an optional technical solution of an embodiment of this application, the first groove is an annular groove disposed around the pressure relief mechanism.

In the above technical solution, the reinforcement member is arranged as an annular structure disposed around the pressure relief mechanism, and the first groove is arranged as an annular groove disposed around the pressure relief mechanism, allowing the reinforcement member to be accommodated in the first groove as much as possible. This reduces the height by which the reinforcement member protrudes beyond the first wall portion, and improves the strength and rigidity of the first wall portion without significantly increasing its weight.

In an optional technical solution of an embodiment of this application, the first wall portion includes a first face, the first groove being disposed on the first face, and the battery cell includes an insulating member, the insulating member being connected to the first face and covering at least part of the reinforcement member.

In the above technical solution, the insulating member is connected to the first face and covers at least part of the reinforcement member, such that the insulating member can, to some extent, prevent the reinforcement member from detaching from the first groove, without requiring adhesive bonding. This allows more of the reinforcement member to be accommodated in the first groove, enhancing the strength around the pressure relief mechanism. Additionally, there is no need to add other structures to connect the reinforcement member, which helps reduce the number of components in the battery cell and lowers the cost of the battery cell.

In an optional technical solution of an embodiment of this application, the insulating member covers the entire reinforcement member.

In the above technical solution, the insulating member covers the entire reinforcement member, further reducing the risk of the reinforcement member detaching from the first groove.

In an optional technical solution of an embodiment of this application, the first face is the outer surface of the first wall portion.

In the above technical solution, the first groove is disposed on the outer surface of the first wall portion, so that when the reinforcement member protrudes beyond the first wall portion, the reinforcement member does not occupy internal space of the battery cell, which is beneficial to improving the energy density of the battery cell. Additionally, the electrolyte inside the battery cell is less likely to come into contact with the reinforcement member, reducing the likelihood of chemical reactions with the reinforcement member.

In an optional technical solution of an embodiment of this application, along the thickness direction of the first wall portion, a depth of the first groove is denoted as H, and a thickness of the first wall portion is denoted as D, satisfying: 0.4 ≤ H/D ≤ 0.7.

In the above technical solution, the depth of the first groove is 0.4 to 0.7 times the thickness of the first wall portion. The depth of the first groove is moderate, allowing sufficient accommodation of the reinforcement member while preventing a relatively small residual thickness of the first wall portion with arrangement of the first groove, making the first wall portion less likely to crack at the position of the first groove. When H/D is less than 0.4, the depth of the first groove is too small, allowing for accommodation of a relatively small reinforcement member, resulting in an insignificant reinforcement effect. When H/D is more than 0.7, the depth of the first groove is too large, and the residual thickness of the first wall portion with arrangement of the first groove is relatively small, making the first wall portion prone to cracking at the position of the first groove.

In an optional technical solution of an embodiment of this application, 0.5 ≤ H/D ≤ 0.6.

In the above technical solution, when 0.5 ≤ H/D ≤ 0.6, the depth of the first groove is moderate, allowing sufficient accommodation of the reinforcement member while preventing a relatively small residual thickness of the first wall portion with arrangement of the first groove, making the first wall portion less likely to crack at the position of the first groove.

In an optional technical solution of an embodiment of this application, the first groove is a groove extending along a non-closed trajectory, or the first groove is a groove extending along a closed trajectory.

In the above technical solution, the first groove extends along a closed trajectory or a non-closed trajectory, facilitating arrangement of the first groove around the pressure relief mechanism, allowing the reinforcement member to be accommodated in the first groove as much as possible.

In an optional technical solution of an embodiment of this application, along a first direction, a groove width of the first groove is denoted as A, satisfying: A ≥ 2 mm, where the first direction is perpendicular to the thickness direction of the first wall portion.

In the above technical solution, the groove width of the first groove is set to be greater than or equal to 2 mm, so that the first groove is sufficiently wide to have enough volume to accommodate the reinforcement member, enhancing the reinforcement effect. When A is less than 2 mm, the width of the first groove is relatively small, allowing for accommodation of a relatively small reinforcement member, resulting in a poor reinforcement effect.

In an optional technical solution of an embodiment of this application, the first wall portion is provided with a pressure relief hole, the pressure relief mechanism is formed separately from and connected to the first wall portion, and the pressure relief mechanism covers the pressure relief hole; and along the first direction, a distance between the first groove and the pressure relief hole is denoted as C, satisfying: 2 mm ≤ C ≤ 10 mm, where the first direction is perpendicular to the thickness direction of the first wall portion.

In the above technical solution, the distance between the first groove and the pressure relief hole is set within 2-10 mm. The distance between the first groove and the pressure relief hole is moderate, enabling the reinforcement member to provide a strong reinforcement effect while preventing the pressure relief mechanism from being easily affected during the processing of the first groove. When C is less than 2 mm, the distance between the first groove and the pressure relief hole is too close, leaving the pressure relief mechanism prone to damage during the processing of the first groove. When C is more than 10 mm, the distance between the first groove and the pressure relief hole is too large, and the reinforcement member is too far from the pressure relief mechanism, making the reinforcement effect around the pressure relief mechanism less significant. Moreover, since the reinforcement member is too far from the pressure relief mechanism, the region between the pressure relief mechanism and the reinforcement member is more susceptible to external impact, increasing the risk of damage to the pressure relief mechanism caused by the external impact.

In an optional technical solution of an embodiment of this application, 4 mm ≤ C ≤ 8 mm.

In the above technical solution, when 4 mm ≤ C ≤ 8 mm, the distance between the first groove and the pressure relief hole is moderate, enabling the reinforcement member to provide a strong reinforcement effect while preventing the pressure relief mechanism from being easily affected during the processing of the first groove.

In an optional technical solution of an embodiment of this application, the first wall portion is provided with a score groove, and the first wall portion forms the pressure relief mechanism in a region in which the score groove is provided; and along the first direction, a distance between the first groove and the score groove is denoted as L, satisfying: 2 mm ≤ L ≤ 10 mm, where the first direction is perpendicular to the thickness direction of the first wall portion.

In the above technical solution, the distance between the first groove and the score groove within 2-10 mm. The distance between the first groove and the score groove is moderate, enabling the reinforcement member to provide a strong reinforcement effect while preventing the pressure relief mechanism from being easily affected during the processing of the first groove. When C is less than 2 mm, the distance between the first groove and the score groove is too close, leaving the pressure relief mechanism prone to damage during the processing of the first groove. When C is more than 10 mm, the distance between the first groove and the score groove is too large, and the reinforcement member is too far from the pressure relief mechanism, making the reinforcement effect around the pressure relief mechanism less significant. Moreover, since the reinforcement member is too far from the pressure relief mechanism, the region between the pressure relief mechanism and the reinforcement member is more susceptible to external impact, increasing the risk of damage to the pressure relief mechanism caused by the external impact.

In an optional technical solution of an embodiment of this application, 4 mm ≤ L ≤ 8 mm.

In the above technical solution, when 4 mm ≤ L ≤ 8 mm, the distance between the first groove and the score groove is moderate, enabling the reinforcement member to provide a strong reinforcement effect while preventing the pressure relief mechanism from being easily affected during the processing of the first groove.

In an optional technical solution of an embodiment of this application, the housing includes a case and an end cap, where the case has an opening; and the end cap closes the opening; where the end cap is the first wall portion.

In the above technical solution, the end cap is the first wall portion, the first groove is disposed on the end cap, and the reinforcement member is accommodated in the first groove. The battery cell may be positioned upright or inverted.

In an optional technical solution of an embodiment of this application, the housing includes a case and an end cap, where the case includes a side wall and the first wall portion integrally formed, the side wall surrounds the first wall portion, and along the thickness direction of the first wall portion, one end of the side wall is connected to the first wall portion, and another end encloses to form an opening; and the end cap closes the opening.

In the above technical solution, the bottom wall of the case is the first wall portion, the first groove is disposed on the bottom wall of the case, and the reinforcement member is accommodated in the first groove.

According to a second aspect, an embodiment of this application provides a battery, where the battery includes the foregoing battery cell.

In an optional technical solution of an embodiment of this application, the battery includes a box, and the battery cell is accommodated in the box.

In the above technical solution, a box is disposed, and the battery cell is accommodated in the box, reducing the impact of the external environment on the battery cell.

In an optional technical solution of an embodiment of this application, the battery cell includes a connecting member, where the connecting member is connected to the reinforcement member, and an end of the connecting member far from the reinforcement member abuts against the box.

In the above technical solution, one end of the connecting member is connected to the reinforcement member, and another end of the connecting member abuts against the box. When the first wall portion is subjected to an external impact, the connecting member can further transmit the impact transmitted to the reinforcement member to the box, thereby dispersing the impact force, and reducing the impact force transmitted to the pressure relief mechanism. This reduces the risk of damage to the pressure relief mechanism caused by the external impact, allowing the pressure relief mechanism to implement normal pressure relief function.

In an optional technical solution of an embodiment of this application, the housing further includes a second wall portion, where the second wall portion is connected to the first wall portion; and the connecting member includes a first connecting portion and a second connecting portion, where the first connecting portion connects the second connecting portion and the reinforcement member, the first connecting portion is disposed opposite the first wall portion, the second connecting portion is disposed opposite the second wall portion, and an end of the second connecting portion far from the first connecting portion abuts against the box.

In the above technical solution, the first connecting portion is disposed opposite the first wall portion and connects the reinforcement member and the second connecting portion, thereby transmitting external impact to the second connecting portion. The second connecting portion abuts against the box to transmit impact to the box, thereby dispersing the impact.

According to a third aspect, an embodiment of this application further provides an electric device, where the electric device includes the foregoing battery cell.

### BRIEF DESCRIPTION OF DRAWINGS

To more clearly illustrate the technical solutions of the embodiments of this application, the drawings required for use in the embodiments will be briefly described below. It should be understood that the following drawings only show some embodiments of this application and should not be regarded as limiting the scope. For those of ordinary skill in the art, other related drawings can be obtained based on these drawings without creative effort.
FIG. 1 is a schematic structural diagram of a vehicle according to some embodiments of this application;
FIG. 2 is an exploded view of a battery according to some embodiments of this application;
FIG. 3 is a schematic structural diagram of a battery cell according to some embodiments of this application;
FIG. 4 is an exploded view of a first wall portion and a pressure relief mechanism according to some embodiments of this application;
FIG. 5 is a schematic top view of a first wall portion according to some embodiments of this application;
FIG. 6 is a cross-sectional view at position E-E in FIG. 5;
FIG. 7 is a schematic structural diagram of a battery cell according to some other embodiments of this application;
FIG. 8 is an exploded view of a first wall portion and a pressure relief mechanism according to some other embodiments of this application;
FIG. 9 is a schematic top view of a first wall portion according to some other embodiments of this application;
FIG. 10 is a schematic structural diagram of a battery cell according to still some embodiments of this application;
FIG. 11 is a schematic diagram of connection between a reinforcement member and a connecting member according to some embodiments of this application;
FIG. 12 is a schematic structural diagram of a battery cell according to yet some embodiments of this application;
FIG. 13 is a schematic top view of a first wall portion according to yet some embodiments of this application;
FIG. 14 is a cross-sectional view at position F-F in FIG. 13;
FIG. 15 is an enlarged view at position G in FIG. 14;
FIG. 16 is a schematic top view of a first wall portion according to further some embodiments of this application; and
FIG. 17 is a cross-sectional view at position I-I in FIG. 16.

Description of reference signs: 1000. vehicle; 100. battery; 10. box; 11. first portion; 12. second portion; 200. controller; 20. battery cell; 2111. first groove; 2112. pressure relief boss; 2113. pressure relief hole; 2114. second groove; 2115. score groove; 211. first wall portion; 212. second wall portion; 213. third wall portion; 21. housing; 22. pressure relief mechanism; 231. protrusion; 23. reinforcement member; 24. protective member; 251. first connecting portion; 252. second connecting portion; 25. connecting member; 26. insulating member; and 300. motor.

### DESCRIPTION OF EMBODIMENTS

To make the objectives, technical solutions, and advantages of the embodiments of this application clearer, the technical solutions in the embodiments of this application will be clearly described below with reference to the drawings in the embodiments of this application. It is apparent that the described embodiments are some, but not all, embodiments of this application. Based on the embodiments in this application, all other embodiments obtained by those of ordinary skill in the art without creative effort fall within the scope of protection of this application.

Unless otherwise defined, all technical and scientific terms used in this application have the same meaning as commonly understood by those skilled in the technical field of this application. The terms used in the specification of this application are only for the purpose of describing specific embodiments and are not intended to limit this application. The terms "include" and "have" and any variations thereof in the specification, claims, and the above description of the drawings of this application are intended to cover non-exclusive inclusion. The terms "first", "second", and the like in the specification, claims, or the above description of the drawings of this application are used to distinguish different objects and not to describe a specific order or primary-secondary relationship.

Reference to "embodiment" in this application means that a specific feature, structure, or characteristic described in connection with the embodiment may be included in at least one embodiment of this application. The appearance of the phrase in various places in the specification does not necessarily refer to the same embodiment or an independent or alternative embodiment exclusive of other embodiments.

In the description of this application, it should be noted that, unless otherwise expressly specified and limited, the terms "install", "connect", "connection", and "attach" should be understood in a broad sense, for example, as a fixed connection, a detachable connection, or an integral connection; a direct connection, an indirect connection through an intermediate medium, or an internal communication between two elements. For those of ordinary skill in the art, the specific meanings of the above terms in this application can be understood according to specific circumstances.

The term "and/or" in this application is merely an association relationship describing associated objects, indicating that three relationships may exist, for example, A and/or B may indicate: A alone, both A and B, and B alone. Additionally, the character "/" in this application generally indicates an "or" relationship between the associated objects.

In the embodiments of this application, the same reference numerals denote the same components, and for brevity, detailed descriptions of the same components are omitted in different embodiments. It should be understood that the thickness, length, width, and other dimensions of various components in the embodiments of this application shown in the drawings, as well as the overall thickness, length, width, and other dimensions of the integrated device, are merely illustrative and should not constitute any limitation to this application.

The term "multiple" in this application refers to two or more (including two).

In some embodiments, the battery may be a battery module, and when there are multiple battery cells, the multiple battery cells are arranged and fixed to form a battery module.

In some embodiments, the battery may be a battery pack, where the battery pack includes a box and a battery cell, the battery cell or battery module being accommodated in the box.

In some embodiments, the box may serve as part of a chassis structure of a vehicle. For example, part of the box may become at least part of a floor of the vehicle, or part of the box may become at least part of a cross beam and a longitudinal beam of the vehicle.

In some embodiments, the battery may be an energy storage apparatus. The energy storage apparatus includes an energy storage container, an energy storage cabinet, and the like.

In the embodiments of this application, the battery cell may be a secondary battery. The secondary battery refers to a battery cell that can be recharged to activate the active material for continued use after discharge.

The battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickelcadmium battery, a lead-acid battery, or the like, which is not limited in the embodiments of this application.

The battery cell typically includes an electrode assembly. The electrode assembly includes a positive electrode, a negative electrode, and a separator. During the charging and discharging process of the battery cell, active ions (for example, lithium ions) intercalate and deintercalate back and forth between the positive electrode and the negative electrode. The separator is disposed between the positive electrode and the negative electrode to prevent a short circuit between the positive and negative electrodes while allowing active ions to pass through.

In some embodiments, the positive electrode may be a positive electrode plate, and the positive electrode plate may include a positive electrode current collector and a positive electrode active material disposed on at least one surface of the positive electrode current collector.

In an example, the positive electrode current collector has two opposite surfaces in its thickness direction, and the positive electrode active material is disposed on either one or both of the two opposite surfaces of the positive electrode current collector.

In an example, the positive electrode current collector may be a metal foil or a composite current collector. For example, as the metal foil, silver-treated aluminum or stainless steel, stainless steel, copper, aluminum, nickel, carbon electrode, carbon, nickel, titanium, or the like may be used. The composite current collector may include a polymer material base layer and a metal layer. The composite current collector may be formed by forming a metal material (aluminum, aluminum alloy, nickel, nickel alloy, titanium, titanium alloy, silver, silver alloy, or the like) on the polymer material substrate (such as a substrate of polypropylene, polyethylene terephthalate, polybutylene terephthalate, polystyrene, or polyethylene).

In an example, the positive electrode active material may include at least one of the following materials: lithium-containing phosphate, lithium transition metal oxide, and respective modified compounds thereof. However, this application is not limited to these materials, and other conventional materials that can be used as positive electrode active materials for batteries may also be used.

In some embodiments, the negative electrode may be a negative electrode plate, and the negative electrode plate may include a negative electrode current collector.

In an example, the negative electrode current collector may be a metal foil or a composite current collector. For example, as the metal foil, silver-treated aluminum or stainless steel, stainless steel, copper, aluminum, nickel, carbon electrode, carbon, nickel, titanium, or the like may be used.

In some embodiments, the negative electrode current collector has two opposite surfaces in its thickness direction, and the negative electrode active material is disposed on either one or both of the two opposite surfaces of the negative electrode current collector.

In an example, the negative electrode active material may be a negative electrode active material known in the art that is used for batteries. In an example, the negative electrode active material may include at least one of the following materials: artificial graphite, natural graphite, soft carbon, hard carbon, silicon-based materials, tin-based materials, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, this application is not limited to these materials, and other conventional materials that can be used as negative electrode active materials for batteries may also be used. These negative electrode active materials may be used alone or in combination of two or more.

In some embodiments, the separator is a separation membrane. This application imposes no particular restrictions on the type of separation membrane, and any well-known porous structure separation membrane with good chemical and mechanical stability may be used.

In an example, a main material of the separation membrane may be selected from at least one of glass fiber, non-woven fabric, polyethylene, polypropylene, polyvinylidene fluoride, and ceramic. The separation membrane may be a single-layer film or a multilayer composite film, which is not particularly limited. When the separation membrane is a multilayer composite film, materials of the layers may be the same or different, which is not particularly limited. The separator may be a standalone component located between the positive and negative electrodes or attached to a surface of the positive or negative electrode.

In some embodiments, the separator is a solid-state electrolyte. The solid-state electrolyte is disposed between the positive electrode and the negative electrode, to transmit ions and separate the positive and negative electrodes.

In some embodiments, the electrode assembly is a wound structure. The positive electrode plate and the negative electrode plate are wound into a wound structure.

In some embodiments, the electrode assembly is a stacked structure.

In some embodiments, the battery cell may include a housing. The housing is configured to package components such as the electrode assembly and the electrolyte. The housing may be a steel shell, an aluminum shell, a plastic shell (for example, polypropylene), a composite metal shell (for example, a copper-aluminum composite shell), an aluminum-plastic film, or the like.

In some embodiments, the battery cell may include a housing. The housing is configured to package components such as the electrode assembly and the electrolyte. The housing may be a steel shell, an aluminum shell, a plastic shell (for example, polypropylene), a composite metal shell (for example, a copper-aluminum composite shell), an aluminum-plastic film, or the like.

In an example, the battery cell may be a cylindrical battery cell, a prismatic battery cell, a pouch battery cell, or a battery cell of other shapes. The prismatic battery cell includes a rectangular-shell battery cell, a blade-shaped battery cell, and a polygonal prismatic battery, where the polygonal prismatic battery is for example, a hexagonal prismatic battery. The embodiments of this application are not particularly limited thereto.

Currently, from the perspective of market development, the application of batteries is becoming increasingly widespread. Batteries are not only used in energy storage power systems such as hydroelectric, thermal, wind, and solar power plants but are also widely applied in electric vehicles such as electric bicycles, electric motorcycles, and electric cars, as well as in multiple fields such as military equipment and aerospace. As the application fields of batteries continue to expand, the market demand is also continuously increasing.

The development of battery technology requires consideration of multiple design factors, such as performance parameters like energy density, cycle life, discharge capacity, and charge-discharge rate. Additionally, reliability of the battery also needs to be considered.

For battery cells, to ensure reliability of battery cells, the prior art provides a pressure relief mechanism on an end cap of a battery cell, where the pressure relief mechanism is configured to open when internal pressure or temperature of the battery cell reaches a burst pressure, so as to release the internal pressure, reducing the risk of explosion or fire of the battery cell. However, during use, the pressure relief mechanism often opens prematurely, resulting in failure to implement normal pressure relief function.

During the use of the battery cell, a wall portion provided with the pressure relief mechanism is susceptible to external impact, and the external impact force is easily transmitted to a position of the pressure relief mechanism, causing the pressure relief mechanism to open prematurely, resulting in failure to implement normal pressure relief function.

In view of this, an embodiment of this application provides a battery cell, where the battery cell includes a housing, a pressure relief mechanism, and a reinforcement member. The housing has a first wall portion, and the first wall portion is provided with a first groove. The pressure relief mechanism is disposed on the first wall portion. The reinforcement member is at least partially accommodated in the first groove, and the reinforcement member is disposed around the pressure relief mechanism.

The reinforcement member is accommodated in the first groove, on one hand, which reduces the height by which the reinforcement member protrudes beyond the first wall portion, or even makes the reinforcement member not protrude beyond the first wall portion, reducing the risk of interference between the reinforcement member and other components. Additionally, the provision of the first groove can reduce the weight of the first wall portion. The reinforcement member is at least partially accommodated in the first groove, which can enhance the rigidity and strength at the position where the first groove is provided, thereby improving the strength and rigidity of the first wall portion without significantly increasing its weight. Moreover, since the reinforcement member is disposed around the pressure relief mechanism, when the first wall portion is subjected to an external impact, the reinforcement member can absorb energy of the external impact, reducing the magnitude of the impact force transmitted to the pressure relief mechanism. This reduces the risk of damage to the pressure relief mechanism caused by the external impact, allowing the pressure relief mechanism to implement normal pressure relief function.

The battery cell disclosed in the embodiments of this application can be used, but is not limited to, in electric devices such as vehicles, ships, or aircraft. A power supply system for the electric device may be composed of the battery cell, the battery, or the like disclosed in this application.

The electric device may be a vehicle, a mobile phone, a portable device, a laptop computer, a ship, a spacecraft, an electric toy, an electric tool, or the like. The spacecraft includes an airplane, a rocket, a space shuttle, a spaceship, and the like. The electric toy includes a fixed or mobile electric toy, such as a game console, an electric car toy, an electric ship toy, and an electric airplane toy. The electric tool includes a metal cutting electric tool, a grinding electric tool, an assembly electric tool, and a railway electric tool, such as an electric drill, an electric grinder, an electric wrench, an electric screwdriver, an electric hammer, an impact drill, a concrete vibrator, and an electric planer.

For ease of description, the following embodiments uses the electric device being a vehicle 1000 as an example for illustration.

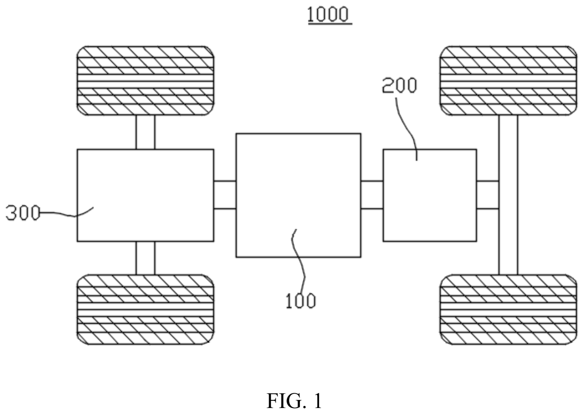

Referring to FIG. 1, FIG. 1 is a schematic structural diagram of a vehicle 1000 according to some embodiments of this application. The vehicle 1000 may be a fossil fuel vehicle, a natural gas vehicle, or a new energy vehicle. The new energy vehicle may be a battery electric vehicle, a hybrid electric vehicle, a range-extended electric vehicle, or the like. A battery 100 is disposed inside the vehicle 1000, and the battery 100 may be disposed at the bottom, front, or rear of the vehicle 1000. The battery 100 may be configured to supply power to the vehicle 1000. For example, the battery 100 may be used as an operational power source for the vehicle 1000. The vehicle 1000 may further include a controller 200 and a motor 300, where the controller 200 is configured to control the battery 100 to supply power to the motor 300, for example, for example, to satisfy power needs of start, navigation, and driving of the vehicle 1000.

In some embodiments of this application, the battery apparatus 100 can be used as not only the operational power source for the vehicle 1000 but also a driving power source for the vehicle 1000, replacing all or part of the fossil fuel or the natural gas to provide driving power for the vehicle 1000.

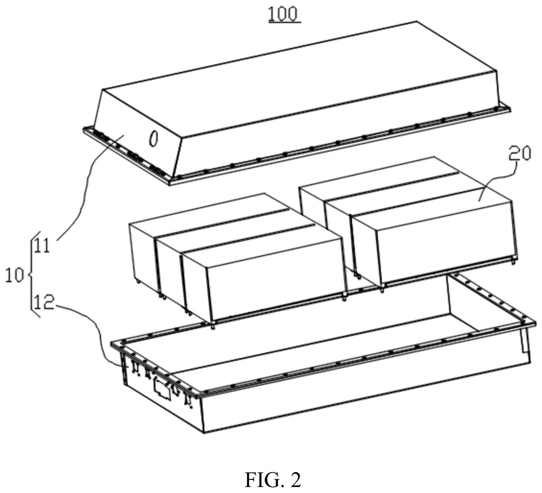

Referring to FIG. 2, FIG. 2 is an exploded view of a battery 100 according to some embodiments of this application. The battery 100 includes a box 10 and a battery cell 20, where the battery cell 20 is accommodated in the box 10. The box 10 is configured to provide an accommodation space for the battery cell 20, and the box 10 may be of various structures. In some embodiments, the box 10 may include a first portion 11 and a second portion 12, where the first portion 11 and the second portion 12 fit together, and the first portion 11 and the second portion 12 together define an accommodation space for accommodating the battery cell 20. The second portion 12 may be a hollow structure with one end open, and the first portion 11 may be a plate-like structure. The first portion 11 covers the open side of the second portion 12, so that the first portion 11 and the second portion 12 together define the accommodation space. The first portion 11 and the second portion 12 may both be hollow structures with one side open, and the open side of the first portion 11 covers the open side of the second portion 12. Certainly, the box 10 formed by the first portion 11 and the second portion 12 may be of various shapes, such as a cylinder or a cuboid.

In the battery 100, there may be multiple battery cells 20, and the multiple battery cells 20 may be connected in series, parallel, or series-parallel, where being connected in series-parallel means a combination of series and parallel connections of the multiple battery cells 20. The multiple battery cells 20 may be directly connected in series, parallel, or series-parallel, and then an entirety formed by the multiple battery cells 20 is accommodated in the box 10. Certainly, the battery 100 may be formed by multiple battery cells 20 being connected in series, parallel, or series-parallel first to form a battery module and then multiple battery modules being connected in series, parallel, or series-parallel to form an entirety which is accommodated in the box 10. The battery 100 may further include other structures, for example, the battery 100 may further include a busbar component for implementing electrical connection between the multiple battery cells 20.

Each battery cell 20 may be a secondary battery cell or a primary battery cell, or may be a lithium-sulfur battery cell, a sodium-ion battery cell, or a magnesium-ion battery cell, but is not limited thereto. The battery cell 20 may be cylindrical, flat, cuboid, or of other shapes.

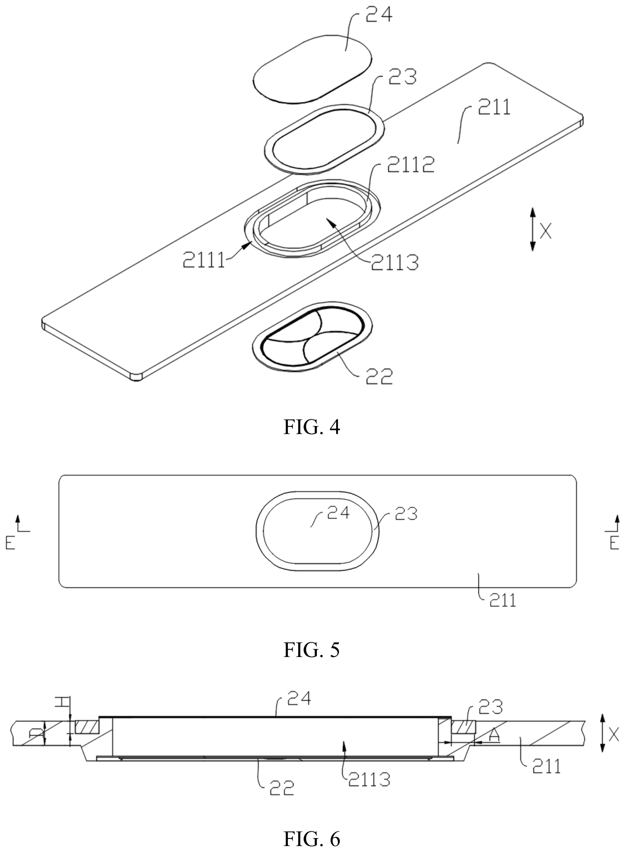

Referring to FIG. 3, FIG. 4, FIG. 5, and FIG. 6, FIG. 3 is a schematic structural diagram of a battery cell 20 according to some embodiments of this application. FIG. 4 is an exploded view of a first wall portion 211 and a pressure relief mechanism 22 according to some embodiments of this application. FIG. 5 is a schematic top view of a first wall portion 211 according to some embodiments of this application. FIG. 6 is a cross-sectional view at position E-E in FIG. 5. An embodiment of this application provides a battery cell 20, where the battery cell 20 includes a housing 21, a pressure relief mechanism 22, and a reinforcement member 23. The housing 21 has a first wall portion 211, and the first wall portion 211 is provided with a first groove 2111. The pressure relief mechanism 22 is disposed on the first wall portion 211. The reinforcement member 23 is at least partially accommodated in the first groove 2111, and the reinforcement member 23 is disposed around the pressure relief mechanism 22.

The battery cell 20 is the smallest unit constituting the battery 100.

The housing 21 includes an end cap and a case. The case has an accommodation space with an opening at one end, the accommodation space being configured to accommodate an electrode assembly. The end cap is connected to the case and closes the opening.

The end cap is a component that covers the opening of the case to isolate the internal environment of the battery cell 20 from the external environment. Without limitation, a shape of the end cap may be adapted to a shape of the case to fit the case. Optionally, the end cap may be made of a material with certain hardness and strength (for example, aluminum alloy), so that the end cap is less likely to deform when subjected to extrusion or collision, enabling the battery cell 20 to have higher structural strength and improved safety performance. The end cap may be provided with functional components such as electrode terminals (not shown in the figures). The electrode terminal may be electrically connected to the electrode assembly 22 for outputting or inputting electrical energy of the battery cell 20. The end cap may be made of various materials, such as copper, iron, aluminum, stainless steel, aluminum alloy, or plastic. In some embodiments, an insulating unit may be further provided on an inner side of the end cap. The insulating unit may be configured to isolate an electrical connection component inside the case from the end cap to reduce the risk of a short circuit. For example, the insulating unit may be plastic, rubber, or the like.

The case is a component configured to cooperate with the end cap to form the internal environment of the battery cell 20, where the formed internal environment can be used to accommodate the electrode assembly 22, the electrolyte, and other components. The case and the end cap may be independent components, and an opening may be provided on the case, with the end cap covering the opening to form the internal environment of the battery cell 20. Without limitation, the end cap and the case may alternatively be integrated; specifically, the end cap and the case may form a common joint surface before other components are placed into the case, and the end cap covers the case when the interior of the case needs to be packaged. The case may be of various shapes and sizes, such as cuboid, cylindrical, or hexagonal prismatic. Specifically, the shape of the case may be determined based on the specific shape and size of the electrode assembly 22. The case may be made of various materials, such as copper, iron, aluminum, stainless steel, aluminum alloy, or plastic.

The pressure relief mechanism 22 is a component configured to open when internal pressure or temperature of the battery cell 20 reaches a burst pressure, so as to release the internal pressure of the battery cell 20.

The housing 21 has multiple walls, such as a bottom wall, a side wall, and a top wall. The first wall portion 211 is a wall provided with the pressure relief mechanism 22. For example, if the pressure relief mechanism 22 is disposed on the bottom wall, the first wall portion 211 is the bottom wall of the case. For another example, if the pressure relief mechanism 22 is disposed on a top wall, the first wall portion 211 is the top wall of the case. For another example, if the pressure relief mechanism 22 is disposed on a side wall, the first wall portion 211 is the side wall of the case. For another example, if the pressure relief mechanism 22 is disposed on the end cap, the first wall portion 211 may also be the end cap.

The first groove 2111 is a groove provided on the first wall portion 211. The first groove 2111 may be disposed on an outer surface of the first wall portion 211, or the first groove 2111 may be disposed on an inner surface of the first wall portion 211. The outer surface of the first wall portion 211 faces away from the interior of the housing 21, and the inner surface of the first wall portion 211 faces the interior of the housing 21. The first groove 2111 may be formed in various ways, such as stamping or milling. The cross-sectional shape of the first groove 2111 may be triangular, rectangular, trapezoidal, or the like.

A portion of the reinforcement member 23 may be accommodated in the first groove 2111, and another portion may be located outside the first groove 2111. In this case, the reinforcement member 23 protrudes beyond the first wall portion 211. The reinforcement member 23 may alternatively be entirely accommodated in the first groove 2111. In this case, the reinforcement member 23 does not protrude beyond the first wall portion 211.

"The reinforcement member 23 being disposed around the pressure relief mechanism 22" may mean that the reinforcement member 23 partially surrounds the pressure relief mechanism 22 or fully surrounds the pressure relief mechanism 22. When the reinforcement member 23 fully surrounds the pressure relief mechanism 22, the reinforcement member 23 is disposed annularly around the pressure relief mechanism 22. The reinforcement member 23 is disposed around the pressure relief mechanism 22 to enhance the strength around the pressure relief mechanism 22. When the first wall portion 211 is subjected to an external impact, the reinforcement member 23 can absorb energy of the external impact, reducing the magnitude of the impact force transmitted to the pressure relief mechanism 22.

The reinforcement member 23 is accommodated in the first groove 2111, which reduces the height by which the reinforcement member 23 protrudes beyond the first wall portion 211, or even makes the reinforcement member 23 not protrude beyond the first wall portion 211, reducing the risk of interference between the reinforcement member 23 and other components. Additionally, the provision of the first groove 2111 can reduce the weight of the first wall portion 211. The reinforcement member 23 is at least partially accommodated in the first groove 2111, which can enhance the rigidity and strength at the position where the first groove 2111 is provided, thereby improving the strength and rigidity of the first wall portion 211 without significantly increasing its weight. Moreover, since the reinforcement member 23 is disposed around the pressure relief mechanism 22, when the first wall portion 211 is subjected to an external impact, the reinforcement member 23 can absorb energy of the external impact, reducing the magnitude of the impact force transmitted to the pressure relief mechanism 22. This reduces the risk of damage to the pressure relief mechanism 22 caused by the external impact, allowing the pressure relief mechanism 22 to implement normal pressure relief function.

In some embodiments, a strength of a material of the reinforcement member 23 is greater than a strength of a material of the first wall portion 211.

The strength of the material of the reinforcement member 23 is greater than the strength of the material of the first wall portion 211. For example, if the material of the first wall portion 211 is aluminum, the material of the reinforcement member 23 may be steel, iron, or the like.

The strength of the material of the reinforcement member 23 is greater than the strength of the material of the first wall portion 211, so that the reinforcement member 23 does not protrude beyond the first wall portion 211, providing a strong reinforcement effect and making it less likely to interfere with other structures.

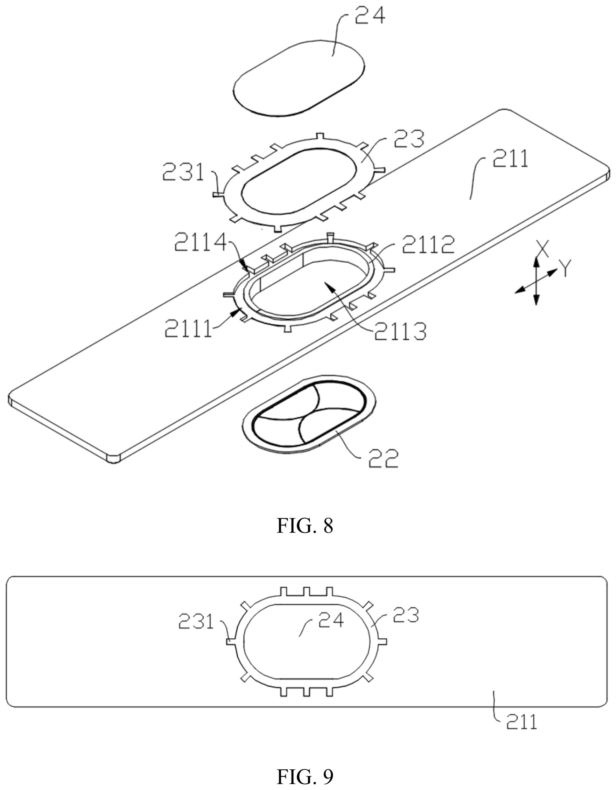

Referring to FIG. 7, FIG. 8, and FIG. 9, FIG. 7 is a schematic structural diagram of a battery cell 20 according to some other embodiments of this application. FIG. 8 is an exploded view of a first wall portion 211 and a pressure relief mechanism 22 according to some other embodiments of this application. FIG. 9 is a schematic top view of a first wall portion 211 according to some other embodiments of this application. In some other embodiments, a protrusion 231 is provided on an outer surface of the reinforcement member 23.

The protrusion 231 is a protruding structure that protrudes beyond the outer surface of the reinforcement member 23. The protrusion 231 may be a strip-shaped protrusion. In this case, the protrusion 231 may extend along a thickness direction of the first wall portion 211, or the protrusion 231 may extend along a direction perpendicular to the thickness direction of the first wall portion 211. Certainly, the protrusion 231 may alternatively be a hemispherical protrusion, a conical protrusion, a platform-shaped protrusion, or the like.

Referring to FIG. 8, the thickness direction of the first wall portion 211 is an X direction shown in FIG. 8. The direction perpendicular to the thickness direction of the first wall portion 211 may be a Y direction shown in FIG. 8.

The protrusion 231 is disposed on the outer surface of the reinforcement member 23, so that the protrusion 231 can provide a reinforcing effect, thereby further improving the strength around the pressure relief mechanism 22 and reducing the risk of damage to the pressure relief mechanism 22 caused by an external impact.

In some embodiments, along a first direction, the protrusion 231 is disposed on a surface of the reinforcement member 23 facing away from the pressure relief mechanism 22, and/or the protrusion 231 is disposed on a surface of the reinforcement member 23 facing the pressure relief mechanism 22. The first direction is perpendicular to the thickness direction of the first wall portion 211.

The first direction is a direction perpendicular to the thickness direction of the first wall portion 211. The first direction may be a length direction of the first wall portion 211, or the first direction may be a width direction of the first wall portion 211. Referring to FIG. 8, the first direction may be the Y direction shown in FIG. 8.

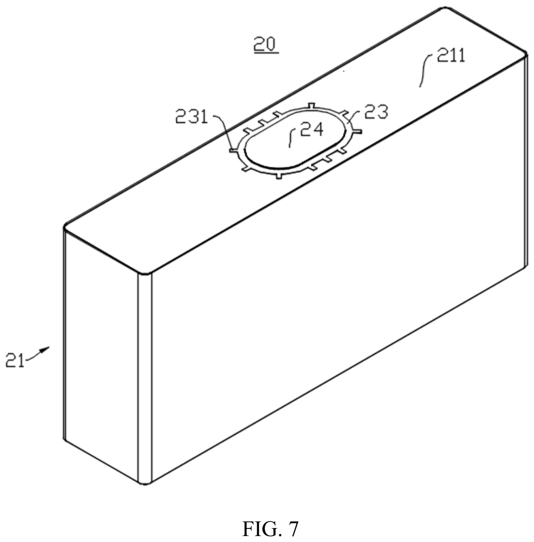

Referring to FIG. 7, FIG. 8, and FIG. 9, in some embodiments, along a first direction, the protrusion 231 is disposed on a surface of the reinforcement member 23 facing away from the pressure relief mechanism 22. Along the first direction, the reinforcement member 23 has a first surface and a second surface disposed opposite each other, where the first surface faces away from the pressure relief mechanism 22, and the second surface faces the pressure relief mechanism 22. In some embodiments, the protrusion 231 is disposed on the first surface. Optionally, the protrusion 231 extends from the first surface in a direction facing away from the pressure relief mechanism 22.

In some other embodiments, along the first direction, the protrusion 231 is disposed on a surface of the reinforcement member 23 facing the pressure relief mechanism 22. Along the first direction, the reinforcement member 23 has a first surface and a second surface disposed opposite each other, where the first surface faces away from the pressure relief mechanism 22, and the second surface faces the pressure relief mechanism 22. The protrusion 231 is disposed on the second surface. Optionally, the protrusion 231 extends from the second surface in a direction facing the pressure relief mechanism 22.

In still some embodiments, multiple protrusions 231 are provided on an outer surface of the reinforcement member 23. A portion of the protrusions 231 are disposed on the surface of the reinforcement member 23 facing the pressure relief mechanism 22, and another portion of the protrusions 231 are disposed on the surface of the reinforcement member 23 facing away from the pressure relief mechanism 22. In other words, the surface of the reinforcement member 23 facing the pressure relief mechanism 22 is provided with the protrusions 231, and the surface of the reinforcement member 23 facing away from the pressure relief mechanism 22 is also provided with the protrusions 231; or the first surface is provided with the protrusions 231, and the second surface is also provided with the protrusions 231.

The protrusion 231 may be disposed on the surface of the reinforcement member 23 facing away from the pressure relief mechanism 22, or on the surface of the reinforcement member 23 facing the pressure relief mechanism 22, or multiple protrusions 231 may be provided, with a portion of the protrusions 231 disposed on the surface of the reinforcement member 23 facing away from the pressure relief mechanism 22 and another portion of the protrusions 231 disposed on the surface of the reinforcement member 23 facing the pressure relief mechanism 22. The protrusion 231 can be regarded as a reinforcing rib, making the overall strength of the reinforcement member 23 higher, thereby enhancing the strength around the pressure relief mechanism 22. When the first wall portion 211 is subjected to an external impact, the reinforcement member 23 can absorb more energy from the external impact to prevent damage, reducing the magnitude of the impact force transmitted to the pressure relief mechanism 22. This reduces the risk of damage to the pressure relief mechanism 22 caused by the external impact, allowing the pressure relief mechanism 22 to implement normal pressure relief function.

In some other embodiments, the protrusion 231 is disposed on a surface of the reinforcement member 23 facing away from an inner surface of the first wall portion 211. In this case, the protrusion 231 can also be regarded as a reinforcing rib, making the overall strength of the reinforcement member 23 higher, thereby enhancing the strength around the pressure relief mechanism 22.

Referring to FIG. 7, FIG. 8, and FIG. 9, in some embodiments, the first wall portion 211 is provided with a second groove 2114, where the second groove 2114 is in communication with the first groove 2111. The protrusion 231 is at least partially accommodated in the second groove 2114.

The second groove 2114 is a groove disposed on the first wall portion 211. The second groove 2114 and the first groove 2111 are disposed on a same surface of the first wall portion 211. For example, when the first groove 2111 is disposed on the outer surface of the first wall portion 211, the second groove 2114 is also disposed on the outer surface of the first wall portion 211. When the first groove 2111 is disposed on the inner surface of the first wall portion 211, the second groove 2114 is also disposed on the inner surface of the first wall portion 211. The second groove 2114 may be formed in various ways, such as stamping or milling. The cross-sectional shape of the second groove 2114 may be triangular, rectangular, trapezoidal, or the like.

The second groove 2114 is in communication with the first groove 2111. A depth of the second groove 2114 may be greater than a depth of the first groove 2111, or a depth of the second groove 2114 may be equal to a depth of the first groove 2111, or a depth of the second groove 2114 may be less than a depth of the first groove 2111. In the embodiments shown in FIG. 7, FIG. 8, and FIG. 9, the depth of the second groove 2114 is equal to the depth of the first groove 2111. A length of the protrusion 231 along the thickness direction is equal to a height of the reinforcement member 23 along the thickness direction.

A portion of the protrusion 231 may be accommodated in the second groove 2114, and another portion may be located outside the second groove 2114. In this case, the protrusion 231 protrudes beyond the first wall portion 211. The protrusion 231 may alternatively be entirely accommodated in the second groove 2114. In this case, the protrusion 231 does not protrude beyond the second wall portion 212.

The protrusion 231 is at least partially accommodated in the second groove 2114, which reduces the height by which the protrusion 231 protrudes beyond the first wall portion 211, or even makes the protrusion 231 not protrude beyond the first wall portion 211, reducing the risk of interference between the protrusion 231 and other components.

In some other embodiments, the first wall portion 211 is not provided with the second groove 2114, and the protrusion 231 abuts against the first wall portion 211.

In some embodiments, a strength of a material of the protrusion 231 is greater than the strength of the material of the first wall portion 211.

The material of the protrusion 231 may be the same as or different from the material of the reinforcement member 23, as long as the strength of the material of the protrusion 231 is greater than the strength of the material of the first wall portion 211. In some embodiments, the material of the protrusion 231 is the same as the material of the reinforcement member 23, and the protrusion 231 is integrally formed with the reinforcement member 23.

The provision of the second groove 2114 can reduce the weight of the first wall portion 211. The protrusion 231 is at least partially accommodated in the second groove 2114, and the strength of the material of the protrusion 231 is greater than the strength of the material of the first wall portion 211, enhancing the rigidity and strength at the position where the second groove 2114 is provided, further improving the strength and rigidity of the first wall portion 211 without significantly increasing its weight.

Referring to FIG. 7, FIG. 8, and FIG. 9, in some embodiments, the reinforcement member 23 is provided with multiple protrusions 231, and the multiple protrusions 231 are arranged along an extending direction of the reinforcement member 23.

Since the reinforcement member 23 is disposed around the pressure relief mechanism 22, the reinforcement member 23 may be a non-closed structure extending along a non-closed trajectory. For example, the reinforcement member 23 may be C-shaped or semicircular. The reinforcement member 23 may alternatively be a closed structure extending along a closed trajectory. For example, the reinforcement member 23 may be in a circular ring shape or a racetrack shape.

The multiple protrusions 231 are arranged along the non-closed trajectory or closed trajectory. Certainly, "the multiple protrusions 231 being arranged along an extending direction of the reinforcement member 23" may also be understood as the multiple protrusions 231 being arranged along a length direction of the reinforcement member 23. Along the extending direction of the reinforcement member 23, adjacent protrusions 231 may be spaced apart or in contact with each other. Referring to FIG. 7, FIG. 8, and FIG. 9, in the embodiments shown in FIG. 7, FIG. 8, and FIG. 9, the multiple protrusions 231 are spaced apart along the extending direction of the reinforcement member 23.

The multiple protrusions 231 are arranged along the extending direction of the reinforcement member 23, further improving the strength around the pressure relief mechanism 22, and reducing the risk of damage to the pressure relief mechanism 22 caused by an external impact.

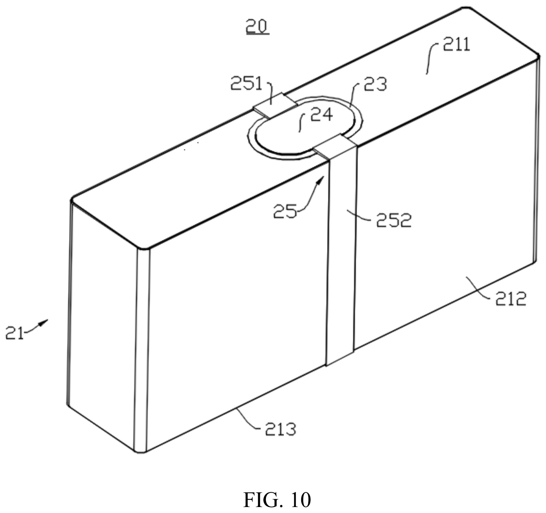

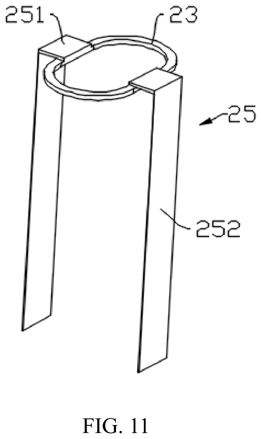

Referring to FIG. 10 and FIG. 11, FIG. 10 is a schematic structural diagram of a battery cell 20 according to still some embodiments of this application.

FIG. 11 is a schematic diagram of connection between a reinforcement member 23 and a connecting member 25 according to some embodiments of this application. In still some embodiments, the housing 21 further includes a second wall portion 212, where the second wall portion 212 is connected to the first wall portion 211. The battery cell 20 includes a connecting member 25, where the connecting member 25 is connected to the reinforcement member 23, and the connecting member 25 is at least partially in contact with an outer surface of the second wall portion 212.

The second wall portion 212 is a wall of the housing 21 adjacent to the first wall portion 211. For example, when the first wall portion 211 is the end cap, the second wall portion 212 may be a side wall of the case. For another example, when the first wall portion 211 is a bottom wall of the case, the second wall portion 212 may also be a side wall of the case. For still another example, when the first wall portion 211 is a side wall of the case, the second wall portion 212 may be the bottom wall of the case, the end cap, or another side wall of the case adjacent to the first wall portion 211.

The connecting member 25 is a component configured to transmit impact. The connecting member 25 is connected to the reinforcement member 23, and the connecting member 25 is at least partially in contact with an outer surface of the second wall portion 212 to transmit impact to the second wall portion 212.

The connecting member 25 is in contact with the outer surface of the second wall portion 212, and there may or may not be a force interaction between them.

When the first wall portion 211 is subjected to an external impact, the connecting member 25 can further transmit the impact transmitted to the reinforcement member 23 to the second wall portion 212, thereby dispersing the impact force, and reducing the impact force transmitted to the pressure relief mechanism 22. This reduces the risk of damage to the pressure relief mechanism 22 caused by the external impact, allowing the pressure relief mechanism 22 to implement normal pressure relief function.

In some embodiments, the reinforcement member 23 and the connecting member 25 are integrally formed to ensure a good integrity between the reinforcement member 23 and the connecting member 25, making the reinforcement member 23 and the connecting member 25 less likely to separate.

Referring to FIG. 10 and FIG. 11, in some embodiments, the battery cell 20 includes two second wall portions 212, where the two second wall portions 212 are disposed opposite each other. Each second wall portion 212 is correspondingly provided with at least one connecting member 25.

The battery cell 20 includes two second wall portions 212 disposed opposite each other, and the battery cell 20 includes multiple connecting members 25, where a portion of the connecting members 25 are in contact with one of the second wall portions 212, and another portion of the connecting members 25 are in contact with the other second wall portion 212. In the embodiments shown in FIG. 10 and FIG. 11, one second wall portion 212 is correspondingly provided with one connecting member 25. In some other embodiments, one second wall portion 212 may be correspondingly provided with two, three, or more connecting members 25.

Referring to FIG. 10 and FIG. 11, in the embodiments shown in FIG. 10 and FIG. 11, the first wall portion 211 is cuboid-shaped. The two second wall portions 212 may be disposed opposite each other in the width direction of the first wall portion 211 or in the length direction of the first wall portion 211.

Each second wall portion 212 is correspondingly provided with at least one connecting member 25, and the connecting member 25 can disperse the external impact to the corresponding second wall portion 212, further reducing the impact force transmitted to the pressure relief mechanism 22. This reduces the risk of damage to the pressure relief mechanism 22 caused by the external impact, allowing the pressure relief mechanism 22 to implement normal pressure relief function.

In some other embodiments, the second wall portions 212 may be provided in a quantity of three or more. In this case, the second wall portions 212 may be arranged sequentially along an outer contour of the first wall portion 211.

Referring to FIG. 10 and FIG. 11, in some embodiments, the connecting member 25 includes a first connecting portion 251 and a second connecting portion 252, where the first connecting portion 251 connects the second connecting portion 252 and the reinforcement member 23. The first connecting portion 251 is disposed opposite the first wall portion 211, and the second connecting portion 252 is in contact with the outer surface of the second wall portion 212.

The first connecting portion 251 is a part of the connecting member 25 opposite the first wall portion 211, and the first connecting portion 251 is connected to the reinforcement member 23. The first connecting portion 251 may extend along the first direction to an edge of the first wall portion 211 to connect to the second connecting portion 252.

The second connecting portion 252 is a part of the connecting member 25 opposite the second wall portion 212. The second connecting portion 252 is at least partially in contact with the outer surface of the second wall portion 212 to transmit impact to the second wall portion 212.

The second connecting portion 252 is in contact with the outer surface of the second wall portion 212, and there may or may not be a force interaction between them.

Referring to FIG. 10 and FIG. 11, in the embodiments shown in FIG. 10 and FIG. 11, the second connecting portion 252 extends along the thickness direction. The first connecting portion 251 and the second connecting portion 252 are connected to form an L-shape. In some other embodiments, the second connecting portion 252 may alternatively be wavy to increase the contact area with the second wall portion 212.

The first connecting portion 251 is disposed opposite the first wall portion 211 and connects the reinforcement member 23 and the second connecting portion 252, thereby transmitting external impact to the second connecting portion 252. The second connecting portion 252 is attached to the outer surface of the second wall portion 212 to transmit impact to the second wall portion 212, thereby dispersing the impact.

Referring to FIG. 10 and FIG. 11, in some embodiments, the housing 21 further includes a third wall portion 213, where the third wall portion 213 is disposed opposite the first wall portion 211, and the second wall portion 212 connects the first wall portion 211 and the third wall portion 213. Along the thickness direction of the first wall portion 211, an end of the second connecting portion 252 far from the first connecting portion 251 protrudes beyond the third wall portion 213.

The third wall portion 213 is a wall of the housing 21 disposed opposite the first wall portion 211. For example, when the first wall portion 211 is the end cap, the second wall portion 212 may be a side wall of the case, and the third wall portion 213 may be the bottom wall of the case. For another example, when the first wall portion 211 is the bottom wall of the case, the second wall portion 212 may be a side wall of the case, and the third wall portion 213 may be the end cap. For still another example, when the first wall portion 211 is a side wall of the case, the second wall portion 212 may be a side wall of the case adjacent to the first wall portion 211, and the third wall portion 213 may be a side wall of the case opposite the first wall portion 211.

"Along the thickness direction of the first wall portion 211, an end of the second connecting portion 252 far from the first connecting portion 251 protruding beyond the third wall portion 213" may also be understood as: along the thickness direction, a distance between the end of the second connecting portion 252 far from the first connecting portion 251 and the outer surface of the first wall portion 211 is greater than a distance between an outer surface of the third wall portion 213 and the outer surface of the first wall portion 211.

The end of the second connecting portion 252 far from the first connecting portion 251 protrudes beyond the third wall portion 213, resulting in a larger contact area between the second connecting portion 252 and the second wall portion 212, thereby facilitating the transmission of the impact force to the second wall portion 212. The end of the second connecting portion 252 far from the first connecting portion 251 can also abut against other components, thereby transmitting the impact to other components to disperse the impact force.

In some other embodiments, the end of the second connecting portion 252 far from the first connecting portion 251 is flush with the outer surface of the third wall portion 213. In this case, the contact area between the second connecting portion 252 and the second wall portion 212 is relatively large, and the second connecting portion 252 is less likely to interfere with other structures, reducing the occupation of the internal space of the box 10 and improving the energy density of the battery 100.

Referring to FIG. 10 and FIG. 11, in some embodiments, the second wall portion 212 is a wall portion of the housing 21 with the largest outer surface area.

The wall portion of the housing 21 with the largest outer surface area is commonly referred to as a large face. In other words, the second wall portion 212 is the large face of the housing 21.

The second wall portion 212 has a relatively large area, effectively buffering the impact transmitted by the connecting member 25.

In some other embodiments, the second wall portion 212 may alternatively be a wall portion of the housing 21 with the smallest outer surface area.

In some embodiments, the first groove 2111 is disposed on the outer surface of the first wall portion 211.

"The first groove 2111 being disposed on the outer surface of the first wall portion 211" may also be understood as: along the thickness direction, the first groove 2111 being recessed from the outer surface of the first wall portion 211 toward the inner surface of the first wall portion 211.

The first groove 2111 is disposed on the outer surface of the first wall portion 211, so that when the reinforcement member 23 protrudes beyond the first wall portion 211, the reinforcement member 23 does not occupy internal space of the battery cell 20, which is beneficial to improving the energy density of the battery cell 20. Additionally, the electrolyte inside the battery cell 20 is less likely to come into contact with the reinforcement member 23, reducing the likelihood of chemical reactions with the reinforcement member 23.

In some other embodiments, the first groove 2111 is disposed on the inner surface of the first wall portion 211. In this case, the reinforcement member 23 does not occupy internal space of the box 10.

In some embodiments, the reinforcement member 23 protrudes beyond the first wall portion 211. In this case, the reinforcement member 23 provides a strong reinforcement effect.

In some other embodiments, the reinforcement member 23 is entirely accommodated in the first groove 2111.

"The reinforcement member 23 being entirely accommodated in the first groove 2111" includes: along the thickness direction, the surface of the reinforcement member 23 facing away from the inner surface of the first wall portion 211 being flush with the outer surface of the first wall portion 211, and also includes: a distance between the surface of the reinforcement member 23 facing away from the inner surface of the first wall portion 211 and the inner surface of the first wall portion 211 being less than a distance between the outer surface of the first wall portion 211 and the inner surface of the first wall portion 211.

The reinforcement member 23 is entirely accommodated in the first groove 2111, so that the reinforcement member 23 does not protrude beyond the first wall portion 211, reducing the likelihood of interference between the reinforcement member 23 and other components. Additionally, for the battery 100, the reinforcement member 23 is entirely accommodated in the first groove 2111, reducing the space occupation within the box 10 and helping improve the energy density of the battery 100.

In some embodiments, along the thickness direction of the first wall portion 211, a surface of the reinforcement member 23 facing away from an inner surface of the first wall portion 211 is flush with the outer surface of the first wall portion 211.

"Along the thickness direction of the first wall portion 211, a surface of the reinforcement member 23 facing away from an inner surface of the first wall portion 211 being flush with the outer surface of the first wall portion 211" means that a distance between the surface of the reinforcement member 23 facing away from the inner surface of the first wall portion 211 and the inner surface of the first wall portion 211 is equal to a distance between the outer surface of the first wall portion 211 and the inner surface of the first wall portion 211.

The surface of the reinforcement member 23 facing away from the inner surface of the first wall portion 211 is flush with the outer surface of the first wall portion 211. In this way, the reinforcement member 23 is exactly accommodated in the first groove 2111, providing a strong reinforcement effect while not protruding beyond the first wall portion 211, reducing the likelihood of interference with other components.

Referring to FIG. 8, FIG. 9, FIG. 10, and FIG. 11, in some embodiments, the reinforcement member 23 is an annular structure disposed around the pressure relief mechanism 22.

The reinforcement member 23 is a closed structure (an annular structure) extending along a closed trajectory. The reinforcement member 23 fully surrounds the pressure relief mechanism 22.

The reinforcement member 23 may be in a circular ring shape, an elliptical ring shape, or a racetrack shape.

The reinforcement member 23 is disposed annularly around the pressure relief mechanism 22. In this way, regardless of which position of the first wall portion 211 is subjected to an external impact, the reinforcement member 23 can effectively absorb energy of the external impact, which reduces the risk of damage to the pressure relief mechanism 22 caused by the external impact, allowing the pressure relief mechanism 22 to implement normal pressure relief function.

Referring to FIG. 8, FIG. 9, FIG. 10, and FIG. 11, in some embodiments, the first groove 2111 is an annular groove disposed around the pressure relief mechanism 22.

The first groove 2111 is a closed groove (an annular groove) extending along a closed trajectory. The first groove 2111 is disposed annularly around an outer side of the pressure relief mechanism 22.

The first groove 2111 may be in a circular ring shape, an elliptical ring shape, or a racetrack shape. The shape of the reinforcement member 23 may match the shape of the first groove 2111.

The reinforcement member 23 is arranged as an annular structure disposed around the pressure relief mechanism 22, and the first groove 2111 is arranged as an annular groove disposed around the pressure relief mechanism 22, allowing the reinforcement member 23 to be accommodated in the first groove 2111 as much as possible. This reduces the height by which the reinforcement member 23 protrudes beyond the first wall portion 211, and improves the strength and rigidity of the first wall portion 211 without significantly increasing its weight.

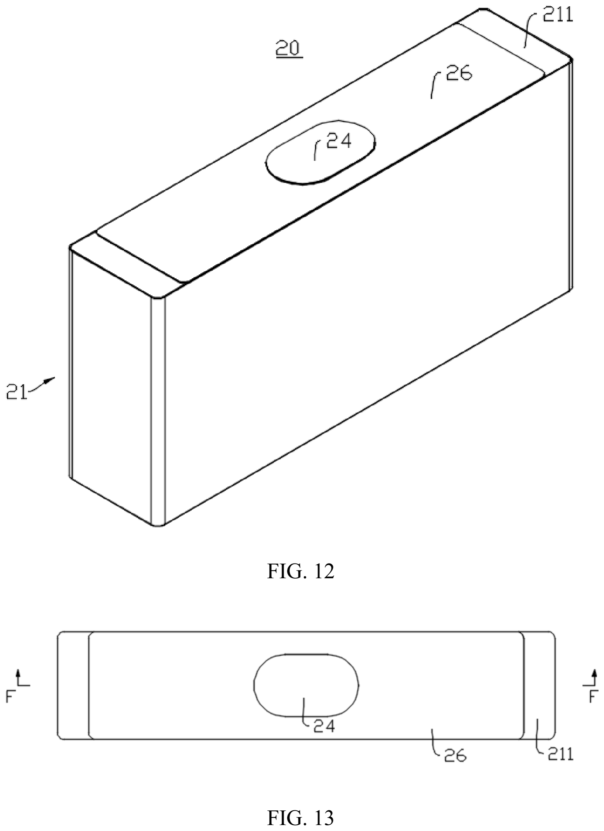

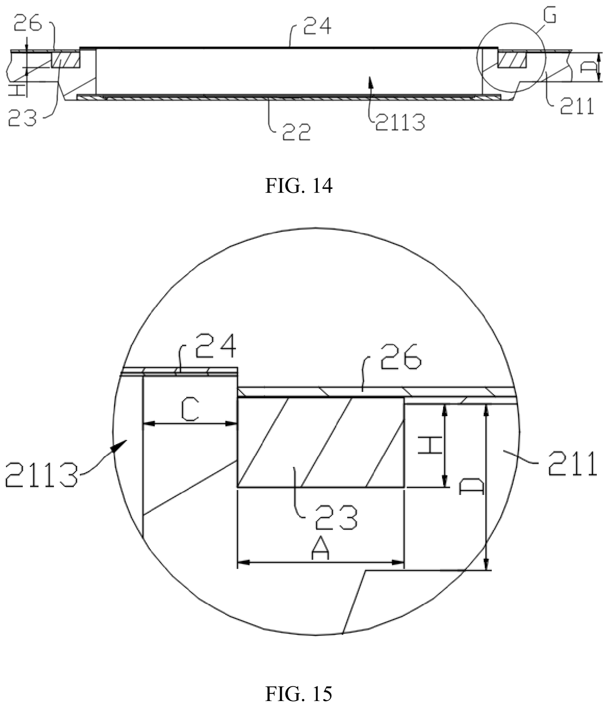

Referring to FIG. 12, FIG. 13, FIG. 14, and FIG. 15, FIG. 12 is a schematic structural diagram of a battery cell 20 according to yet some embodiments of this application. FIG. 13 is a schematic top view of a first wall portion 211 according to yet some embodiments of this application. FIG. 14 is a cross-sectional view at position F-F in FIG. 13. FIG. 15 is an enlarged view at position G in FIG. 14. In some embodiments, the first wall portion 211 includes a first face, the first groove 2111 being disposed on the first face. The battery cell 20 includes an insulating member 26, the insulating member 26 being connected to the first face and covering at least part of the reinforcement member 23.

The first face specifically refers to a surface of the first wall portion 211 where the first groove 2111 is disposed. When the first groove 2111 is disposed on the outer surface of the first wall portion 211, the first face is the outer surface of the first wall portion 211. When the first groove 2111 is disposed on the inner surface of the first wall portion 211, the first face is the inner surface of the first wall portion 211.

The insulating member 26 is made of a material with insulating property, such as plastic or rubber. The insulating member 26 is connected to the first face to insulate the first face from other components.

"The insulating member 26 being connected to the first face" means that the insulating member 26 is fixed to the first face. Optionally, the insulating member 26 is bonded to the first face.

The insulating member 26 may cover part of the reinforcement member 23, or the insulating member 26 may cover the entire reinforcement member 23.

The insulating member 26 may be an insulating patch or an overmolded plastic part.

The insulating member 26 is connected to the first face and covers at least part of the reinforcement member 23, such that the insulating member 26 can, to some extent, prevent the reinforcement member 23 from detaching from the first groove 2111, without requiring adhesive bonding. This allows more of the reinforcement member 23 to be accommodated in the first groove 2111, enhancing the strength around the pressure relief mechanism 22. Additionally, there is no need to add other structures to connect the reinforcement member 23, which helps reduce the number of components in the battery cell 20 and lowers the cost of the battery cell 20.

Referring to FIG. 12, FIG. 13, FIG. 14, and FIG. 15, in some embodiments, the insulating member 26 covers the entire reinforcement member 23.

Along the thickness direction, a projection of the reinforcement member 23 on the insulating member 26 falls entirely within the insulating member 26.

The insulating member 26 covers the entire reinforcement member 23, further reducing the risk of the reinforcement member 23 detaching from the first groove 2111.

In some embodiments, the first face is the outer surface of the first wall portion 211.

The first groove 2111 is disposed on the outer surface of the first wall portion 211, so that when the reinforcement member 23 protrudes beyond the first wall portion 211, the reinforcement member 23 does not occupy internal space of the battery cell 20, which is beneficial to improving the energy density of the battery cell 20. Additionally, the electrolyte inside the battery cell 20 is less likely to come into contact with the reinforcement member 23, reducing the likelihood of chemical reactions with the reinforcement member 23.

Referring to FIG. 14 and FIG. 15, in some embodiments, along the thickness direction of the first wall portion 211, a depth of the first groove 2111 is denoted as H, and a thickness of the first wall portion 211 is denoted as D, satisfying: 0.4 ≤ H/D ≤ 0.7.

H denotes the depth of the first groove 2111. The depth of the first groove 2111 may be uniform, in which case the depth at any position can be taken as the depth of the first groove 2111. The depth of the first groove 2111 may alternatively vary, in which case a ratio of a maximum depth of the first groove 2111 to the thickness of the first wall portion 211 is less than or equal to 0.7, and a ratio of a minimum depth of the first groove 2111 to the thickness of the first wall portion 211 is greater than or equal to 0.4. During measurement, a maximum distance between the open end of the first groove 2111 and the bottom surface opposite the open end can be measured.

D denotes the thickness of the first wall portion 211, that is, along the thickness direction, a distance between the outer surface of the first wall portion 211 and the inner surface of the first wall portion 211.

Along the thickness direction, a ratio of the depth of the first groove 2111 to the thickness of the first wall portion 211 may be: H/D = 0.4, 0.42, 0.45, 0.48, 0.5, 0.52, 0.55, 0.58, 0.6, 0.62, 0.65, 0.68, 0.7, or the like.

The depth of the first groove 2111 is 0.4 to 0.7 times the thickness of the first wall portion 211. The depth of the first groove 2111 is moderate, allowing sufficient accommodation of the reinforcement member 23 while preventing a relatively small residual thickness of the first wall portion 211 with arrangement of the first groove 2111, making the first wall portion 211 less likely to crack at the position of the first groove 2111. When H/D is less than 0.4, the depth of the first groove 2111 is too small, allowing for accommodation of a relatively small reinforcement member 23, resulting in an insignificant reinforcement effect. When H/D is more than 0.7, the depth of the first groove 2111 is too large, and the residual thickness of the first wall portion 211 with arrangement of the first groove 2111 is relatively small, making the first wall portion 211 prone to cracking at the position of the first groove 2111.

In some embodiments, 0.5 ≤ H/D ≤ 0.6.

Along the thickness direction, the ratio of the depth of the first groove 2111 to the thickness of the first wall portion 211 may be: H/D = 0.6, 0.61, 0.62, 0.63, 0.64, 0.65, 0.66, 0.67, 0.68, 0.69, 0.7, or the like.

When 0.5 ≤ H/D ≤ 0.6, the depth of the first groove 2111 is moderate, allowing sufficient accommodation of the reinforcement member 23 while preventing a relatively small residual thickness of the first wall portion 211 with arrangement of the first groove 2111, making the first wall portion 211 less likely to crack at the position of the first groove 2111.

In some embodiments, the first groove 2111 is a groove extending along a non-closed trajectory, or the first groove 2111 is a groove extending along a closed trajectory.

When the first groove 2111 is a non-closed groove extending along a non-closed trajectory, the first groove 2111 may be C-shaped, U-shaped, semicircular, or the like.

When the first groove 2111 is a closed groove extending along a closed trajectory, the first groove 2111 may be in a circular ring shape, an elliptical ring shape, a racetrack shape, or the like.

The first groove 2111 extends along a closed trajectory or a non-closed trajectory, facilitating arrangement of the first groove 2111 around the pressure relief mechanism 22, allowing the reinforcement member 23 to be accommodated in the first groove 2111 as much as possible.

Referring to FIG. 14 and FIG. 15, in some embodiments, along a first direction, a groove width of the first groove 2111 is denoted as A, satisfying: A ≥ 2 mm. The first direction is perpendicular to the thickness direction of the first wall portion 211.

A denotes the groove width of the first groove 2111. Along the extending direction of the first groove 2111, the groove widths of the first groove 2111 may be consistent, in which case the groove width at any position can be taken as the groove width of the first groove 2111. Along the extending direction of the first groove 2111, the groove widths of the first groove 2111 may alternatively vary, in which case A denotes a minimum groove width of the first groove 2111, meaning that the minimum groove width of the first groove 2111 is greater than or equal to 2 mm. During measurement, the width of the open end of the first groove 2111 can be measured as the groove width of the first groove 2111.

The groove width of the first groove 2111 may be: A = 2 mm, 2.5 mm, 3 mm, 3.5 mm, 4 mm, 4.5 mm, 5 mm, or the like.

The groove width of the first groove 2111 is set to be greater than or equal to 2 mm, so that the first groove 2111 is sufficiently wide to have enough volume to accommodate the reinforcement member 23, enhancing the reinforcement effect. When A is less than 2 mm, the width of the first groove 2111 is relatively small, allowing for accommodation of a relatively small reinforcement member 23, resulting in a poor reinforcement effect.

In some other embodiments, the first groove 2111 may alternatively be a polygonal groove, such as a rectangular groove.

Referring to FIG. 14 and FIG. 15, in some embodiments, the first wall portion 211 is provided with a pressure relief hole 2113, the pressure relief mechanism 22 is formed separately from and connected to the first wall portion 211, and the pressure relief mechanism 22 covers the pressure relief hole 2113. Along the first direction, a distance between the first groove 2111 and the pressure relief hole 2113 is denoted as C, satisfying: 2 mm ≤ C ≤ 10 mm. The first direction is perpendicular to the thickness direction of the first wall portion 211.

The pressure relief hole 2113 is a through-hole penetrating the inner and outer surfaces of the first wall portion 211, allowing gas inside the battery cell 20 to be discharged out of the battery cell 20 through the pressure relief hole 2113.

"The pressure relief mechanism 22 being formed separately from and connected to the first wall portion 211" means that during manufacturing, the pressure relief mechanism 22 and the first wall portion 211 are provided separately and ultimately connected together. For example, the pressure relief mechanism 22 may be welded to the first wall portion 211.

Referring to FIG. 14 and FIG. 15, in the embodiments shown in FIG. 14 and FIG. 15, a reinforcing protrusion is disposed on the inner surface of the first wall portion 211, and the reinforcing protrusion is disposed around the pressure relief hole 2113. A pressure relief boss 2112 is disposed on the outer surface of the first wall portion 211, and the pressure relief boss 2112 is disposed around the pressure relief hole 2113. A third groove is disposed on the reinforcing protrusion, and the pressure relief hole 2113 penetrates a bottom wall of the third groove and the outer surface of the first wall portion 211. The pressure relief mechanism 22 is disposed in the third groove and covers the pressure relief hole 2113. A protective member 24 is disposed on the pressure relief boss 2112, and the protective member 24 shields the pressure relief hole 2113 to reduce the risk of external impurities falling into the pressure relief hole 2113.

C denotes a distance between the first groove 2111 and the pressure relief hole 2113 along the first direction. Distances between various positions of the first groove 2111 along its length direction and the pressure relief hole 2113 may be consistent, in which case the distance at any position can be taken as the distance between the first groove 2111 and the pressure relief hole 2113 along the first direction. The distances between various positions of the first groove 2111 along its length direction and the pressure relief hole 2113 may alternatively vary, in which case it is required that a maximum distance between the first groove 2111 and the pressure relief hole 2113 is less than or equal to 10 mm, and that a minimum distance between the first groove 2111 and the pressure relief hole 2113 is greater than or equal to 2 mm. During measurement, a distance between a hole wall of the pressure relief hole 2113 and the open end of the first groove 2111 can be measured.

Along the first direction, the distance between the first groove 2111 and the pressure relief hole 2113 may be: C = 2 mm, 2.5 mm, 3 mm, 3.5 mm, 4 mm, 4.5 mm, 5 mm, 5.5 mm, 6 mm, 6.5 mm, 7 mm, 7.5 mm, 8 mm, 8.5 mm, 9 mm, 9.5 mm, 10 mm, or the like.

The distance between the first groove 2111 and the pressure relief hole 2113 is set within 2-10 mm. The distance between the first groove 2111 and the pressure relief hole 2113 is moderate, enabling the reinforcement member 23 to provide a strong reinforcement effect while preventing the pressure relief mechanism 22 from being easily affected during the processing of the first groove 2111. When C is less than 2 mm, the distance between the first groove 2111 and the pressure relief hole 2113 is too close, leaving the pressure relief mechanism 22 prone to damage during the processing of the first groove 2111. When C is more than 10 mm, the distance between the first groove 2111 and the pressure relief hole 2113 is too large, and the reinforcement member 23 is too far from the pressure relief mechanism 22, making the reinforcement effect around the pressure relief mechanism 22 less significant. Moreover, since the reinforcement member 23 is too far from the pressure relief mechanism 22, the region between the pressure relief mechanism 22 and the reinforcement member 23 is more susceptible to external impact, increasing the risk of damage to the pressure relief mechanism 22 caused by the external impact.

In some embodiments, 4 mm ≤ C ≤ 8 mm.

Along the first direction, the distance between the first groove 2111 and the pressure relief hole 2113 may be: C = 4 mm, 4.2 mm, 4.5 mm, 4.8 mm, 5 mm, 5.2 mm, 5.5 mm, 5.8 mm, 6 mm, 6.2 mm, 6.5 mm, 6.8 mm, 7 mm, 7.2 mm, 7.5 mm, 7.8 mm, 8 mm, or the like.

When 4 mm ≤ C ≤ 8 mm, the distance between the first groove 2111 and the pressure relief hole 2113 is moderate, enabling the reinforcement member 23 to provide a strong reinforcement effect while preventing the pressure relief mechanism 22 from being easily affected during the processing of the first groove 2111.

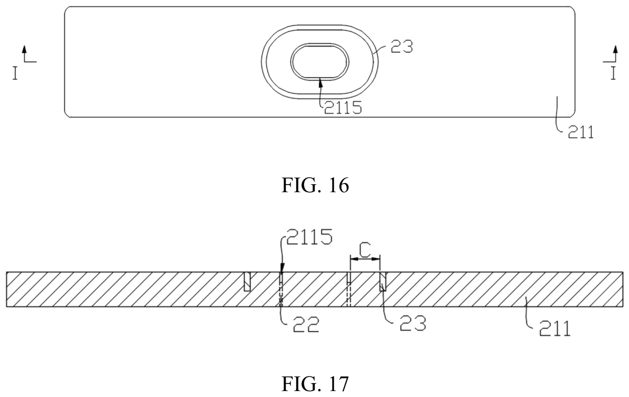

Referring to FIG. 16 and FIG. 17, FIG. 16 is a schematic top view of a first wall portion 211 according to yet other embodiments of this application. FIG. 17 is a cross-sectional view at position I-I in FIG. 16. In some embodiments, the first wall portion 211 is provided with a score groove 2115, and the first wall portion 211 forms the pressure relief mechanism 22 in a region in which the score groove 2115 is provided. Along the first direction, a distance between the first groove 2111 and the score groove 2115 is denoted as L, satisfying: 2 mm ≤ L ≤ 10 mm, where the first direction is perpendicular to the thickness direction of the first wall portion 211.

The score groove 2115 may be formed in various ways, such as stamping or milling. The score groove 2115 may be disposed on the outer surface of the first wall portion 211 or on the inner surface of the first wall portion 211.

The score groove 2115 may be a groove recessed from the outer surface of the first wall portion 211 along the thickness direction of the first wall portion 211, and the pressure relief mechanism 22 is a part of the first wall portion 211 between the inner surface and a bottom surface of the score groove 2115. The score groove 2115 may alternatively be a groove recessed from the inner surface of the first wall portion 211 along the thickness direction of the first wall portion 211, and the pressure relief mechanism 22 is a part of the first wall portion 211 between the outer surface and the bottom surface of the score groove 2115.

Referring to FIG. 17, a boundary of the pressure relief mechanism 22 is shown by a dashed line in FIG. 17. It should be noted that the dashed line is only used to indicate the boundary of the pressure relief mechanism 22 and does not represent that there is any other physical structure blocked at the position of the dashed line.

The score groove 2115 being a groove recessed from the outer surface of the first wall portion 211 along the thickness direction of the first wall portion 211 is used as an example for illustration. The score groove 2115 may be a linear groove extending along a folded trajectory. For example, referring to FIG. 16, the folded trajectory is an annular trajectory, and the pressure relief mechanism 22 is an annular part of the first wall portion 211 between the inner surface and the bottom surface of the score groove 2115.

L denotes a distance between the first groove 2111 and the score groove 2115 along the first direction. Distances between various positions of the first groove 2111 along its length direction and the score groove 2115 may be consistent, in which case the distance at any position can be taken as the distance between the first groove 2111 and the score groove 2115 along the first direction. The distances between various positions of the first groove 2111 along its length direction and the score groove 2115 may alternatively vary, in which case it is required that a maximum distance between the first groove 2111 and the score groove 2115 is less than or equal to 10 mm, and that a minimum distance between the first groove 2111 and the score groove 2115 is greater than or equal to 2 mm. During measurement, a distance between the open end of the first groove 2111 and an open end of the score groove 2115 can be measured.

Along the first direction, the distance between the first groove 2111 and the score groove 2115 may be: L = 2 mm, 2.5 mm, 3 mm, 3.5 mm, 4 mm, 4.5 mm, 5 mm, 5.5 mm, 6 mm, 6.5 mm, 7 mm, 7.5 mm, 8 mm, 8.5 mm, 9 mm, 9.5 mm, 10 mm, or the like.

The distance between the first groove 2111 and the score groove 2115 is set within 2-10 mm. The distance between the first groove 2111 and the score groove 2115 is moderate, enabling the reinforcement member 23 to provide a strong reinforcement effect while preventing the pressure relief mechanism 22 from being easily affected during the processing of the first groove 2111. When L is less than 2 mm, the distance between the first groove 2111 and the score groove 2115 is too close, leaving the pressure relief mechanism 22 prone to damage during the processing of the first groove 2111. When L is more than 10 mm, the distance between the first groove 2111 and the score groove 2115 is too large, and the reinforcement member 23 is too far from the pressure relief mechanism 22, making the reinforcement effect around the pressure relief mechanism 22 less significant. Moreover, since the reinforcement member 23 is too far from the pressure relief mechanism 22, the region between the pressure relief mechanism 22 and the reinforcement member 23 is more susceptible to external impact, increasing the risk of damage to the pressure relief mechanism 22 caused by the external impact.

In some embodiments, 4 mm ≤ L ≤ 8 mm.

Along the first direction, the distance between the first groove 2111 and the score groove 2115 may be: L = 4 mm, 4.2 mm, 4.5 mm, 4.8 mm, 5 mm, 5.2 mm, 5.5 mm, 5.8 mm, 6 mm, 6.2 mm, 6.5 mm, 6.8 mm, 7 mm, 7.2 mm, 7.5 mm, 7.8 mm, 8 mm, or the like.

When 4 mm ≤ L ≤ 8 mm, the distance between the first groove 2111 and the score groove 2115 is moderate, enabling the reinforcement member 23 to provide a strong reinforcement effect while preventing the pressure relief mechanism 22 from being easily affected during the processing of the first groove 2111.

Referring to FIG. 12 to FIG. 17, in some embodiments, the housing 21 includes a case and an end cap, where the case has an opening, and the end cap closing the opening. The end cap is the first wall portion 211.

The end cap is the first wall portion 211, the first groove 2111 is disposed on the end cap, and the reinforcement member 23 is accommodated in the first groove 2111. The battery cell 20 may be positioned upright or inverted.

In some other embodiments, the housing 21 includes a case and an end cap, where the case includes a side wall and the first wall portion 211 integrally formed, the side wall surrounding the first wall portion 211. Along the thickness direction of the first wall portion 211, one end of the side wall is connected to the first wall portion 211, and another end encloses to form an opening. The end cap closes the opening.

During provision of the case, the side wall and the bottom wall are an integral structure. The side wall and the bottom wall may be integrally formed by stamping, or may be integrally formed by casting. One end of the side wall is connected to the bottom wall, and another end of the side wall is connected to the end cap. Along a thickness direction of the end cap, the bottom wall and the end cap are disposed opposite each other. The bottom wall is the first wall portion 211.

The bottom wall of the case is the first wall portion 211, the first groove 2111 is disposed on the bottom wall of the case, and the reinforcement member 23 is accommodated in the first groove 2111.

In still some embodiments, one side wall of the case is the first wall portion 211.

An embodiment of this application further provides a battery 100, where the battery 100 includes the foregoing battery cell 20.

In some embodiments, the battery 100 includes a box 10, and the battery cell 20 is accommodated in the box 10.

The box 10 is disposed, and the battery cell 20 is accommodated in the box 10, reducing impact of the external environment on the battery cell 20.

In some embodiments, the battery cell 20 includes a connecting member 25, where the connecting member 25 is connected to the reinforcement member 23, and an end of the connecting member 25 far from the reinforcement member 23 abuts against the box 10.

The connecting member 25 is a component configured to transmit impact. One end of the connecting member 25 is connected to the reinforcement member 23, and another end of the connecting member 25 abuts against the box 10 to transmit impact to the box 10.

One end of the connecting member 25 is connected to the reinforcement member 23, and another end of the connecting member 25 abuts against the box 10. When the first wall portion 211 is subjected to an external impact, the connecting member 25 can further transmit the impact transmitted to the reinforcement member 23 to the box 10, thereby dispersing the impact force, and reducing the impact force transmitted to the pressure relief mechanism 22. This reduces the risk of damage to the pressure relief mechanism 22 caused by the external impact, allowing the pressure relief mechanism 22 to implement normal pressure relief function.

In some embodiments, the housing 21 further includes a second wall portion 212, where the second wall portion 212 is connected to the first wall portion 211. The connecting member 25 includes a first connecting portion 251 and a second connecting portion 252, where the first connecting portion 251 connects the second connecting portion 252 and the reinforcement member 23. The first connecting portion 251 is disposed opposite the first wall portion 211, the second connecting portion 252 is disposed opposite the second wall portion 212, and an end of the second connecting portion 252 far from the first connecting portion 251 abuts against the box 10.

The first connecting portion 251 is a part of the connecting member 25 opposite the first wall portion 211, and the first connecting portion 251 is connected to the reinforcement member 23. The first connecting portion 251 may extend along the first direction to an edge of the first wall portion 211 to connect to the second connecting portion 252. The second connecting portion 252 is a part of the connecting member 25 that abuts against the box 10 to transmit impact to the second wall portion 212.

The first connecting portion 251 is disposed opposite the first wall portion 211 and connects the reinforcement member 23 and the second connecting portion 252, thereby transmitting external impact to the second connecting portion 252. The second connecting portion 252 abuts against the box 10 to transmit impact to the box 10, thereby dispersing the impact.

An embodiment of this application further provides an electric device, where the electric device includes the foregoing battery cell 20.

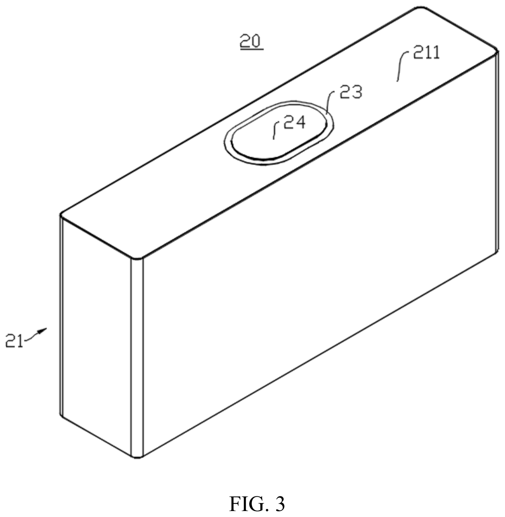

According to some embodiments of this application, refer to FIG. 3 to FIG. 15.

An embodiment of this application provides a battery cell 20, where the battery cell 20 includes a housing 21, a pressure relief mechanism 22, and a reinforcement member 23. The housing 21 has a first wall portion 211, where the first wall portion 211 is provided with a first groove 2111, and the pressure relief mechanism 22 is disposed on the first wall portion 211. The reinforcement member 23 is at least partially accommodated in the first groove 2111, and the reinforcement member 23 is disposed around the pressure relief mechanism 22. A strength of a material of the reinforcement member 23 is greater than a strength of a material of the first wall portion 211. The reinforcement member 23 is accommodated in the first groove 2111, which reduces the height by which the reinforcement member 23 protrudes beyond the first wall portion 211, or even makes the reinforcement member 23 not protrude beyond the first wall portion 211, reducing the risk of interference between the reinforcement member 23 and other components. Additionally, the provision of the first groove 2111 can reduce the weight of the first wall portion 211, and the reinforcement member 23 is at least partially accommodated in the first groove 2111, which can enhance the rigidity and strength at the position where the first groove 2111 is provided, thereby improving the strength and rigidity of the first wall portion 211 without significantly increasing its weight. Moreover, since the reinforcement member 23 is disposed around the pressure relief mechanism 22, when the first wall portion 211 is subjected to an external impact, the reinforcement member 23 can absorb energy of the external impact, reducing the magnitude of the impact force transmitted to the pressure relief mechanism 22. This reduces the risk of damage to the pressure relief mechanism 22 caused by the external impact, allowing the pressure relief mechanism 22 to implement normal pressure relief function.

Along a first direction, a protrusion 231 is disposed on a surface of the reinforcement member 23 facing away from the pressure relief mechanism 22. The protrusion 231 can be regarded as a reinforcing rib, making the overall strength of the reinforcement member 23 higher, thereby enhancing the strength around the pressure relief mechanism 22. When the first wall portion 211 is subjected to an external impact, the reinforcement member 23 can absorb more energy from the external impact to prevent damage, reducing the magnitude of the impact force transmitted to the pressure relief mechanism 22. This reduces the risk of damage to the pressure relief mechanism 22 caused by the external impact, allowing the pressure relief mechanism 22 to implement normal pressure relief function.

The housing 21 further includes a second wall portion 212 and a third wall portion 213, where the third wall portion 213 is disposed opposite the first wall portion 211, and the second wall portion 212 connects the first wall portion 211 and the third wall portion 213. The battery cell 20 includes a connecting member 25, where the connecting member 25 includes a first connecting portion 251 and a second connecting portion 252, the first connecting portion 251 connects the second connecting portion 252 and the reinforcement member 23, and the first connecting portion 251 is disposed opposite the first wall portion 211. The second connecting portion 252 is in contact with an outer surface of the second wall portion 212. An end of the second connecting portion 252 far from the first connecting portion 251 protrudes beyond the third wall portion 213. The first connecting portion 251 is disposed opposite the first wall portion 211 and connects the reinforcement member 23 and the second connecting portion 252, thereby transmitting external impact to the second connecting portion 252. The second connecting portion 252 is attached to the outer surface of the second wall portion 212 to transmit impact to the second wall portion 212, thereby dispersing the impact. The end of the second connecting portion 252 far from the first connecting portion 251 protrudes beyond the third wall portion 213, resulting in a larger contact area between the second connecting portion 252 and the second wall portion 212, thereby facilitating the transmission of the impact force to the second wall portion 212. The end of the second connecting portion 252 far from the first connecting portion 251 can also abut against other components, thereby transmitting the impact to other components to disperse the impact force.

The first wall portion 211 includes a first face, the first groove 2111 being disposed on the first face, and the battery cell 20 includes an insulating member 26, the insulating member 26 being connected to the first face and covering the reinforcement. The insulating member 26 is connected to the first face and covers the reinforcement member 23, such that the insulating member 26 can, to some extent, prevent the reinforcement member 23 from detaching from the first groove 2111, without requiring adhesive bonding. This allows more of the reinforcement member 23 to be accommodated in the first groove 2111, enhancing the strength around the pressure relief mechanism 22. Additionally, there is no need to add other structures to connect the reinforcement member 23, which helps reduce the number of components in the battery cell 20 and lowers the cost of the battery cell 20.

The first face is an outer surface of the first wall portion 211. The first groove 2111 is disposed on the outer surface of the first wall portion 211, so that when the reinforcement member 23 protrudes beyond the first wall portion 211, the reinforcement member 23 does not occupy internal space of the battery cell 20, which is beneficial to improving the energy density of the battery cell 20. Additionally, the electrolyte inside the battery cell 20 is less likely to come into contact with the reinforcement member 23, reducing the likelihood of chemical reactions with the reinforcement member 23.

The reinforcement member 23 is an annular structure disposed around the pressure relief mechanism 22. The first groove 2111 is an annular groove disposed around the pressure relief mechanism 22. The reinforcement member 23 is entirely accommodated in the first groove 2111. The reinforcement member 23 is disposed annularly around the pressure relief mechanism 22. In this way, regardless of which position of the first wall portion 211 is subjected to an external impact, the reinforcement member 23 can effectively absorb energy of the external impact, which reduces the risk of damage to the pressure relief mechanism 22 caused by the external impact, allowing the pressure relief mechanism 22 to implement normal pressure relief function. The reinforcement member 23 is arranged as an annular structure disposed around the pressure relief mechanism 22, and the first groove 2111 is arranged as an annular groove disposed around the pressure relief mechanism 22, allowing the reinforcement member 23 to be accommodated in the first groove 2111 as much as possible. This reduces the height by which the reinforcement member 23 protrudes beyond the first wall portion 211, and improves the strength and rigidity of the first wall portion 211 without significantly increasing its weight. The reinforcement member 23 is entirely accommodated in the first groove 2111, so that the reinforcement member 23 does not protrude beyond the first wall portion 211, reducing the likelihood of interference between the reinforcement member 23 and other components. Additionally, for the battery 100, the reinforcement member 23 is entirely accommodated in the first groove 2111, reducing the space occupation within the box 10 and helping improve the energy density of the battery 100.

Along the thickness direction of the first wall portion 211, a depth of the first groove 2111 is denoted as H, and a thickness of the first wall portion 211 is denoted as D, satisfying: 0.4 ≤ H/D ≤ 0.7. Along a first direction, a groove width of the first groove 2111 is denoted as A, satisfying: A ≥ 2 mm. The first direction is perpendicular to the thickness direction of the first wall portion 211. The depth of the first groove 2111 is 0.4 to 0.7 times the thickness of the first wall portion 211. The depth of the first groove 2111 is moderate, allowing sufficient accommodation of the reinforcement member 23 while preventing a relatively small residual thickness of the first wall portion 211 with arrangement of the first groove 2111, making the first wall portion 211 less likely to crack at the position of the first groove 2111. When H/D is less than 0.4, the depth of the first groove 2111 is too small, allowing for accommodation of a relatively small reinforcement member 23, resulting in an insignificant reinforcement effect. When H/D is more than 0.7, the depth of the first groove 2111 is too large, and the residual thickness of the first wall portion 211 with arrangement of the first groove 2111 is relatively small, making the first wall portion 211 prone to cracking at the position of the first groove 2111. The groove width of the first groove 2111 is set to be greater than or equal to 2 mm, so that the first groove 2111 is sufficiently wide to have enough volume to accommodate the reinforcement member 23, enhancing the reinforcement effect. When A is less than 2 mm, the width of the first groove 2111 is relatively small, allowing for accommodation of a relatively small reinforcement member 23, resulting in a poor reinforcement effect.

An embodiment of this application further provides a battery 100. The battery 100 includes the foregoing battery cell 20 and a box 10, where the battery cell 20 is accommodated in the box 10. The battery cell 20 includes a connecting member 25, where the connecting member 25 is connected to the reinforcement member 23, and an end of the connecting member 25 far from the reinforcement member 23 abuts against the box 10. One end of the connecting member 25 is connected to the reinforcement member 23, and another end of the connecting member 25 abuts against the box 10. When the first wall portion 211 is subjected to an external impact, the connecting member 25 can further transmit the impact transmitted to the reinforcement member 23 to the box 10, thereby dispersing the impact force, and reducing the impact force transmitted to the pressure relief mechanism 22. This reduces the risk of damage to the pressure relief mechanism 22 caused by the external impact, allowing the pressure relief mechanism 22 to implement normal pressure relief function.

It should be noted that in the absence of conflict, the embodiments and features in the embodiments of this application may be combined with each other.

The above descriptions are only preferred embodiments of this application and are not intended to limit this application. For those skilled in the art, this application may have various modifications and variations. Any modifications, equivalent substitutions, improvements, and the like made within the spirit and principles of this application shall fall within the protection scope of this application.

## Claims

1. A battery cell, comprising:
a housing having a first wall portion, wherein the first wall portion is provided with a first groove;
a pressure relief mechanism disposed on the first wall portion; and
a reinforcement member at least partially accommodated in the first groove, wherein the reinforcement member is disposed around the pressure relief mechanism, and a protrusion is disposed on an outer surface of the reinforcement member.

2. The battery cell according to claim 1, wherein a strength of a material of the reinforcement member is greater than a strength of a material of the first wall portion.

3. The battery cell according to claim 1 or 2, wherein along a first direction, the protrusion is disposed on a surface of the reinforcement member facing away from the pressure relief mechanism, and/or the protrusion is disposed on a surface of the reinforcement member facing the pressure relief mechanism; wherein
the first direction is perpendicular to a thickness direction of the first wall portion.

4. The battery cell according to claim 3, wherein the first wall portion is provided with a second groove, wherein the second groove is in communication with the first groove, and the protrusion is at least partially accommodated in the second groove.

5. The battery cell according to claim 4, wherein a strength of a material of the protrusion is greater than the strength of the material of the first wall portion.

6. The battery cell according to any one of claims 3 to 5, wherein the reinforcement member is provided with multiple protrusions, and the multiple protrusions are arranged along an extending direction of the reinforcement member.

7. The battery cell according to any one of claims 1 to 6, wherein the housing further comprises a second wall portion, wherein the second wall portion is connected to the first wall portion; and
the battery cell comprises a connecting member, wherein the connecting member is connected to the reinforcement member, and the connecting member is at least partially in contact with an outer surface of the second wall portion.

8. The battery cell according to claim 7, wherein the battery cell comprises two second wall portions, wherein the two second wall portions are disposed opposite each other, and each of the second wall portions is correspondingly provided with at least one connecting member.

9. The battery cell according to claim 7 or 8, wherein the connecting member comprises a first connecting portion and a second connecting portion, wherein the first connecting portion connects the second connecting portion and the reinforcement member, the first connecting portion is disposed opposite the first wall portion, and the second connecting portion is in contact with the outer surface of the second wall portion.

10. The battery cell according to claim 9, wherein the housing further comprises a third wall portion, wherein the third wall portion is disposed opposite the first wall portion, the second wall portion connects the first wall portion and the third wall portion, and along the thickness direction of the first wall portion, an end of the second connecting portion far from the first connecting portion protrudes beyond the third wall portion.

11. The battery cell according to any one of claims 7 to 10, wherein the second wall portion is a wall portion of the housing with the largest outer surface area.

12. The battery cell according to any one of claims 1 to 11, wherein the first groove is disposed on an outer surface of the first wall portion.

13. The battery cell according to claim 12, wherein the reinforcement member is entirely accommodated in the first groove.

14. The battery cell according to claim 13, wherein along the thickness direction of the first wall portion, a surface of the reinforcement member facing away from an inner surface of the first wall portion is flush with the outer surface of the first wall portion.

15. The battery cell according to any one of claims 1 to 14, wherein the reinforcement member is an annular structure disposed around the pressure relief mechanism.

16. The battery cell according to claim 15, wherein the first groove is an annular groove disposed around the pressure relief mechanism.

17. The battery cell according to any one of claims 1 to 16, wherein the first wall portion comprises a first face, the first groove being disposed on the first face, and the battery cell comprises an insulating member, the insulating member being connected to the first face and covering at least part of the reinforcement member.

18. The battery cell according to claim 17, wherein the insulating member covers the entire reinforcement member.

19. The battery cell according to claim 17 or 18, wherein the first face is the outer surface of the first wall portion.

20. The battery cell according to any one of claims 1 to 19, wherein along the thickness direction of the first wall portion, a depth of the first groove is denoted as H, and a thickness of the first wall portion is denoted as D, satisfying: 0.4 ≤ H/D ≤ 0.7.

21. The battery cell according to claim 20, wherein 0.5 ≤ H/D ≤ 0.6.

22. The battery cell according to any one of claims 1 to 21, wherein the first groove is a groove extending along a non-closed trajectory, or the first groove is a groove extending along a closed trajectory.

23. The battery cell according to claim 22, wherein along a first direction, a groove width of the first groove is denoted as A, satisfying: A ≥ 2 mm, wherein the first direction is perpendicular to the thickness direction of the first wall portion.

24. The battery cell according to any one of claims 1 to 23, wherein the first wall portion is provided with a pressure relief hole, the pressure relief mechanism is formed separately from and connected to the first wall portion, and the pressure relief mechanism covers the pressure relief hole; and
along the first direction, a distance between the first groove and the pressure relief hole is denoted as C, satisfying: 2 mm ≤ C ≤ 10 mm, wherein the first direction is perpendicular to the thickness direction of the first wall portion.

25. The battery cell according to claim 24, wherein 4 mm ≤ C ≤ 8 mm.

26. The battery cell according to any one of claims 1 to 23, wherein the first wall portion is provided with a score groove, and the first wall portion forms the pressure relief mechanism in a region in which the score groove is provided; and
along the first direction, a distance between the first groove and the score groove is denoted as L, satisfying: 2 mm ≤ L ≤ 10 mm, wherein the first direction is perpendicular to the thickness direction of the first wall portion.

27. The battery cell according to claim 26, wherein 4 mm ≤ L ≤ 8 mm.

28. The battery cell according to any one of claims 1 to 27, wherein the housing comprises:
a case having an opening; and
an end cap closing the opening;
wherein the end cap is the first wall portion.

29. The battery cell according to any one of claims 1 to 27, wherein the housing comprises:
a case comprising an integrally formed side wall and the first wall portion, wherein the side wall surrounds the first wall portion, and along the thickness direction of the first wall portion, one end of the side wall is connected to the first wall portion, and another end encloses to form an opening; and
an end cap closing the opening.

30. A battery, comprising the battery cell according to any one of claims 1 to 29.

31. The battery according to claim 30, wherein the battery comprises a box, the battery cell being accommodated in the box.

32. The battery according to claim 31, wherein the battery cell comprises a connecting member, wherein the connecting member is connected to the reinforcement member, and an end of the connecting member far from the reinforcement member abuts against the box.

33. The battery according to claim 32, wherein the housing further comprises a second wall portion, wherein the second wall portion is connected to the first wall portion; and
the connecting member comprises a first connecting portion and a second connecting portion, wherein the first connecting portion connects the second connecting portion and the reinforcement member, the first connecting portion is disposed opposite the first wall portion, the second connecting portion is disposed opposite the second wall portion, and an end of the second connecting portion far from the first connecting portion abuts against the box.

34. An electric device, wherein the electric device comprises the battery cell according to any one of claims 1 to 29.
